# EUROPEAN PATENT SPECIFICATION

(11) **EP 3 182 230 B1**
(45) Date of publication and mention of the grant of the patent: **30.12.2020**
(21) Application number: 16200688.6
(22) Date of filing: 25.11.2016
(51) Int. Cl.: G05B 13/02, G05B 19/416

(54) **ADJUSTMENT APPARATUS, CONTROL PARAMETER ADJUSTMENT METHOD, INFORMATION PROCESSING PROGRAM, AND STORAGE MEDIUM**
ANPASSUNGSVORRICHTUNG, STEUERPARAMETERANPASSUNGSVERFAHREN, INFORMATIONSVERARBEITUNGSPROGRAMM UND SPEICHERMEDIUM
APPAREIL DE RÉGLAGE, PROCÉDÉ DE RÉGLAGE DE PARAMÈTRE DE COMMANDE, PROGRAMME DE TRAITEMENT D'INFORMATIONS ET SUPPORT D'INFORMATIONS

(30) Priority: 18.12.2015 JP 2015247619
(43) Date of publication of application: 21.06.2017
(73) Proprietor: OMRON CORPORATION, Kyoto, Kyoto 600-8530 (JP)
(72) Inventor: MORI, Yasumoto, Kyoto, Kyoto 600-8530 (JP); EGI, Mamoru, Kyoto, Kyoto 600-8530 (JP); KAWANISHI, Yasutomo, Kyoto, Kyoto 600-8530 (JP); ONO, Yasushi, Kyoto, Kyoto 600-8530 (JP); MIYAGUCHI, Shota, Kyoto, Kyoto 600-8530 (JP)
(74) Representative: Horn Kleimann Waitzhofer Patentanwälte PartG mbB

(56) References cited:
- Yaskawa: "Sigma II Series Servo System User's Manual (Chapter 7 - Using the Digital Operator)", , 1 September 2009 (2009-09-01), pages 275-330, XP055362888, Retrieved from the Internet: URL:https://www.yaskawa.com/delegate/getAt tachment?documentId=YEA-SIA-S800-32.2&cmd= documents&documentName=YEA-SIA-S800-32.2.p df&web_access=Public [retrieved on 2017-04-07]
- Hannifin Parker: "Parker Hannifin - Electromechanical Automation Div", Parkermotion, 21 November 2010 (2010-11-21), XP055387733, Retrieved from the Internet: URL:http://web.archive.org/web/20101121160 230/http://www.compumotor.com/whitepages/S ervoFundamentals.pdf [retrieved on 2017-07-04]
- Ac Servo Systems Ac Servo Systems: "CONTROL MODES OF OPERATION AND TUNING 5 CHAPTER CHAPTER 5 5 CHAPTER In This Chapter", , 1 August 2011 (2011-08-01), XP055387306, Retrieved from the Internet: URL:https://cdn.automationdirect.com/stati c/manuals/sureservomanual/ch5.pdf [retrieved on 2017-07-03]
- Laszlo Szamel: "Adaptive PF(PDF)Speed Control for Servo Drives", International Journal of Automation and Power Engineering, 31 May 2013 (2013-05-31), pages 65-73, XP055606640, Retrieved from the Internet: URL:http://real.mtak.hu/20576/1/146961.pdf [retrieved on 2019-07-17]

## Description

### FIELD

The present invention relates to an adjustment apparatus that adjusts a control parameter for a servomotor.

### BACKGROUND

A control system known in the art for controlling a servomotor sets control parameters including a position gain, a velocity gain, and an inertia value, and controls the driving status of the servomotor. For example, Patent Literature 1 below describes a development system for a servo system including a servomotor, a development support apparatus for adjusting the position gain and the velocity gain of the servomotor, and a servo driver for setting an inertia value.

### CITATION LIST

### PATENT LITERATURE

Patent Literature 1: Japanese Unexamined Patent Application Publication No. 2011-244668 (published on December 1, 2011) Non-patent document *"*Sigma II Series Servo System User's Manual" by Yaskawa, downloadable from https://www.yaskawa.com/downloads, document number YEA-SIA-S800-32.2, discloses, in section 6.3.1, an online auto-tuning function which enables a servo amplifier to check changes in the load inertia during operation.

### SUMMARY

### TECHNICAL PROBLEM

With the above technique known in the art, the servo driver sets the inertia value independently of the position gain and the velocity gain set by the development support apparatus. When the set inertia value that is yet to be adjusted deviates greatly from the characteristics of, for example, the actual inertia value, the stability of position control performed with this technique can be lower. This may cause a large overshoot during adjustment of the control parameters. Changing the set inertia value may cause a sudden change in the control characteristics. This can cause an oscillation of the motor or a sudden change in its operation during the adjustment.

In response to the above issue, one or more aspects of present invention are directed to control that is less likely to cause an overshoot when an actual inertia value is yet to be determined.

### SOLUTION TO PROBLEM

In response to the above issue, an adjustment apparatus according to claim 1 and an adjustment method according to claim 3 are provided. According to one aspect of the present invention adjusts a control parameter for a servomotor. The adjustment apparatus includes a gain adjustment unit that adjusts a position proportional gain and a velocity proportional gain in parallel. The position proportional gain is used in position control performed in a servo driver for controlling the servomotor. The velocity proportional gain is used in velocity control performed in the servo driver. When the servo driver is yet to determine an actual inertia value of a load machine, the gain adjustment unit sets a ratio of the position proportional gain to the velocity proportional gain to a value smaller than a ratio set when the servo driver has determined the actual inertia value of the load machine.

When the actual inertia value of the load machine is yet to be determined, the adjustment apparatus with this structure sets the ratio of the position proportional gain to the velocity proportional gain to a value smaller than the ratio set when the servo driver has determined the actual inertia value of the load machine. In this case, the damping coefficient in a transfer function for the position control performed in the servo driver is greater than a damping coefficient used when the actual inertia value of the load machine has been determined. The adjustment apparatus thus enables the servo driver to perform control that is less likely to cause an overshoot when the actual inertia value of the load machine is yet to be determined.

In some embodiments, when the servo driver is yet to determine the actual inertia value of the load machine, the gain adjustment unit sets the ratio to a value smaller than the ratio set when the servo driver has determined the actual inertia value of the load machine in accordance with an estimated maximum value of an inertia value of the load machine.

The adjustment apparatus with this structure sets the ratio in accordance with the estimated maximum value of the inertia value of the load machine. The adjustment apparatus sets the ratio for the least stable actual control based on the estimated maximum value of the inertia value of the load machine. The development adjustment apparatus thus enables the servo driver to perform control that is less likely to cause an overshoot when the actual inertia value of the load machine is yet to be determined.

In some embodiments, the adjustment apparatus further includes an inertia reception unit that receives, from the servo driver, an inertia value of a load machine controlled by the servo driver. In a period in which the inertia reception unit receives, from the servo driver, an initial inertia value used when the actual inertia value of the load machine is yet to be determined, the gain adjustment unit sets the ratio to a value obtained by multiplying a value set when the servo driver has determined the actual inertia value of the load machine by the initial inertia value divided by the maximum value.

The adjustment apparatus with this structure sets the ratio to a value obtained by multiplying the value set when the actual inertia value of the load machine has been determined by the initial inertia value divided by the maximum value. In this case, the adjustment apparatus can have a damping coefficient equal to or greater than a predetermined value independently of any deviation of the initial inertia value from the actual inertia value. The adjustment apparatus thus enables the servo driver to perform control without causing an overshoot when the actual inertia value of the load machine is yet to be determined.

In some embodiments, the gain adjustment unit gradually increases the position proportional gain and the velocity proportional gain from initial values until optimum response is obtained.

The adjustment apparatus with this structure gradually increases the position proportional gain and the velocity proportional gain from the initial values to adjust the gains. The adjustment apparatus thus enables the servo driver to perform control with a gradually increasing amount of control, and to perform control without causing an overshoot.

In some embodiments, when the inertia reception unit receives, from the servo driver, a real inertia value determined as the actual inertia value of the load machine, the gain adjustment unit sets the velocity proportional gain used after the real inertia value is received in a manner to cause a product of the initial inertia value multiplied by the velocity proportional gain set before the real inertia value is received to be equal to a product of the real inertia value multiplied by the velocity proportional gain used after the real inertia value is received.

The adjustment apparatus with this structure sets the velocity proportional gain used after the real inertia value is received to cause the product of the initial inertia value multiplied by the velocity proportional gain set before the real inertia value is received to be equal to the product of the real inertia value multiplied by the velocity proportional gain used after the real inertia value is received. Thus, the adjustment apparatus can adjust the velocity control characteristics of the servo driver gradually without changing them greatly, independently of any large deviation of the initial inertia value from the real inertia value. The adjustment apparatus thus prevents an oscillation and a sudden operational change during control.

In some embodiments, the gain adjustment unit sets the position proportional gain used after the real inertia value is received based on the velocity proportional gain used after the real inertia value is received.

The adjustment apparatus with this structure sets the position proportional gain used after the real inertia value is received based on the velocity proportional gain used after the real inertia value is received. The position proportional gain used after the real inertia value is received is set based on the velocity proportional gain used after the real inertia value is received independently of any large deviation of the initial inertia value from the real inertia value. The adjustment apparatus can use the velocity proportional gain used after the real inertia value is received to determine the position proportional gain to fall within a range in which the position control characteristics are stable. The adjustment apparatus thus enables control that is less likely to cause an overshoot.

In response to the above issue, a method according to another aspect of the present invention is used to adjust a control parameter for a servomotor. The method includes adjusting a position proportional gain and a velocity proportional gain in parallel. The position proportional gain is used in position control performed in a servo driver for controlling the servomotor. The velocity proportional gain is used in velocity control performed in the servo driver. In the gain adjustment process, when the servo driver is yet to determine an actual inertia value of a load machine, a ratio of the position proportional gain to the velocity proportional gain is set to a value smaller than a ratio set when the servo driver has determined the actual inertia value of the load machine.

When the actual inertia value of the load machine is yet to be determined, the control parameter adjustment method sets the ratio of the position proportional gain to the velocity proportional gain to a value smaller than the ratio set when the servo driver has determined the actual inertia value of the load machine. In this case, the damping coefficient in a transfer function for the position control performed in the servo driver is greater than a damping coefficient used when the actual inertia value of the load machine has been determined. The control parameter adjustment method thus enables the servo driver to perform control that is less likely to cause an overshoot when the actual inertia value of the load machine is yet to be determined.

### ADVANTAGEOUS EFFECTS

One or more embodiments of the present invention enable control that is less likely to cause an overshoot when an actual inertia value is yet to be determined.

### BRIEF DESCRIPTION OF THE DRAWINGS

Fig. 1 is a block diagram showing the main components of a development support apparatus according to a first embodiment of the present invention.
Fig. 2 is a schematic diagram showing a control system including the development support apparatus shown in Fig. 1.
Fig. 3 is a diagram showing the correspondence between transfer elements and components of a servo driver communicating with the development support apparatus shown in Fig. 1.
Fig. 4 is a block diagram of the servo driver communicating with the development support apparatus shown in Fig. 1.
Fig. 5 is a flowchart showing the processing performed by the development support apparatus shown in Fig. 1.
Fig. 6 is a block diagram showing the main components of a development support apparatus according to a second embodiment of the present invention.
Fig. 7 is a flowchart showing the processing performed by the development support apparatus shown in Fig. 6.
Fig. 8 is a block diagram showing the main components of a development support apparatus according to a third embodiment of the present invention.
Fig. 9 is a schematic diagram showing a development support apparatus known in the art.
Fig. 10 is a flowchart showing the processing performed by the development support apparatus known in the art.

### DETAILED DESCRIPTION

### First Embodiment

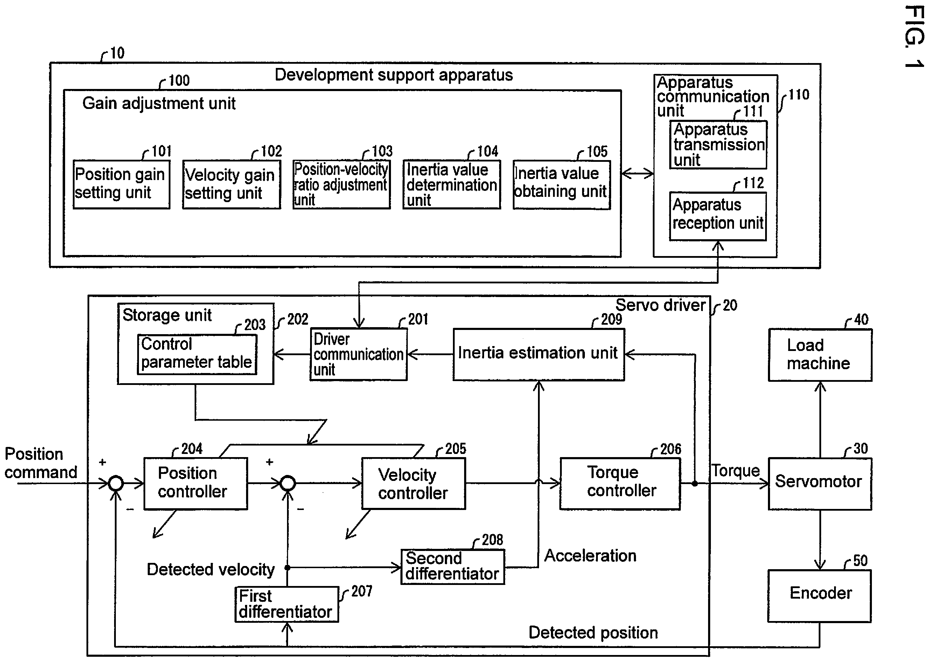

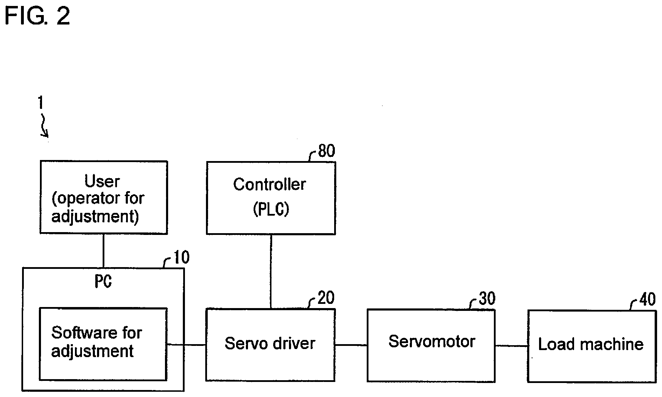

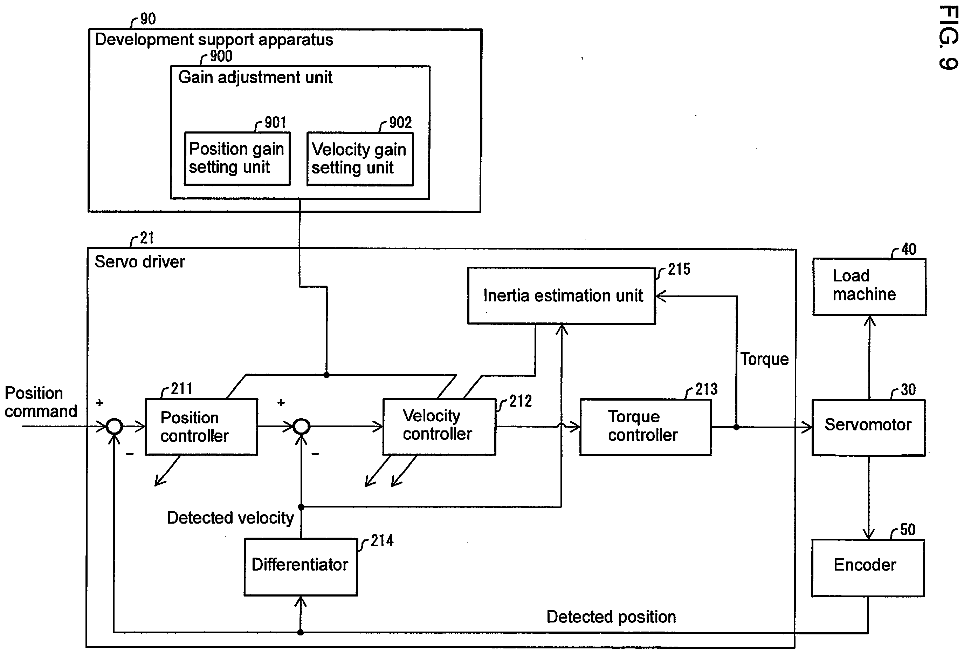

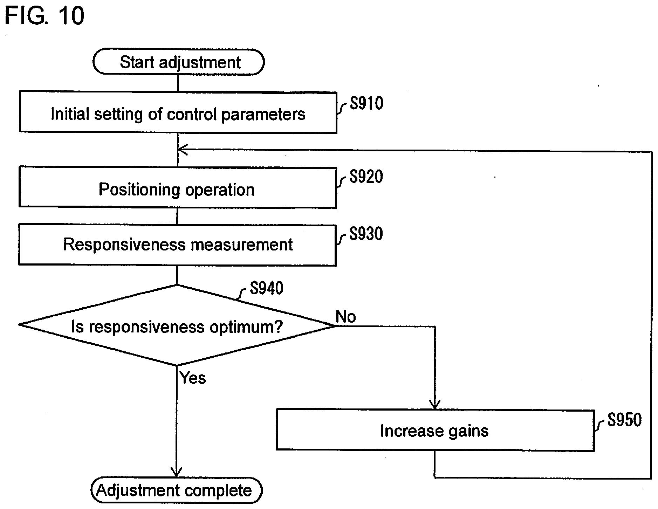

A first embodiment of the present invention will now be described in detail with reference to Figs. 1 to 5. The same or corresponding components in the figures are given the same reference numerals, and will not be described redundantly. To facilitate understanding of a development support apparatus 10 (adjustment apparatus for adjusting a control parameter for a servomotor 30) according to one embodiment of the present invention, a control system 1 including the development support apparatus 10 will now be briefly described with reference to Fig. 2. A development support apparatus 90 known in the art described later with reference to Figs. 9 and 10 is used in the same environment as for the control system 1.

### Overview of Control System According to First Embodiment

Fig. 2 is a schematic diagram showing the control system 1 including the development support apparatus 10. As shown in Fig. 2, the control system 1 includes the development support apparatus 10, a servo driver 20, the servomotor 30, a load machine 40 driven by the servomotor 30, and a controller (programmable logic controller, or PLC) 80.

The development support apparatus 10 sets and adjusts control parameters used in the servo driver 20. More specifically, the development support apparatus 10 automatically adjusts control parameters (in particular, a position gain and a velocity gain) used in the servo driver 20 to optimize the responsiveness of the servo driver 20. The development support apparatus 10 is, for example, a personal computer. The personal computer executes programs stored in it to function as the development support apparatus 10.

A developer (e.g., a user of the servo system) uses the development support apparatus 10 to set and adjust the control parameters used in the servo driver 20. For example, the user selects a control parameter to be set and adjusted from a plurality of control parameters displayed on the screen of the development support apparatus 10, and sets and adjusts the selected control parameter. The set and adjusted parameter is transferred from the development support apparatus 10 to the servo driver 20.

The servo driver 20 stores the control parameter set and adjusted by the development support apparatus 10. The servo driver 20 drives the servomotor 30 and controls the driving status of the servomotor 30 in accordance with the control parameter. More specifically, the servo driver 20 uses the control parameter set (adjusted) by the development support apparatus 10 to control the servomotor 30 and cause the servomotor 30 to drive the load machine 40. A command for the servo driver 20 for operating the motor may be provided through, for example, the setting performed by the development support apparatus 10 or based on an input from an upper controller (not shown) (e.g., the controller 80 in Fig. 2). More specifically, the servo driver 20 receives a control signal from the controller 80, and controls the servomotor 30 based on the received control signal. For example, the servo driver 20 drives the servomotor 30 based on the control signal to cause the servomotor 30 to rotate at a predetermined rotational speed and by a predetermined rotation amount. The servo driver 20 further estimates the inertia value of a control target (e.g., the servomotor 30, and the load machine 40 driven by the servomotor 30). The servo driver 20 stores the internally estimated inertia value, and uses the inertia value to drive the servomotor 30 as a control parameter.

The controller 80 transmits a command (control signal) for drive control (e.g., positioning control) of the servomotor 30 to the servo driver 20 to control the servo driver 20. The controller 80 controls the servo driver 20 by, for example, transmitting a control signal to the servo driver 20 storing the control parameter set and adjusted by the development support apparatus 10.

The servo driver 20 is connected to each of the development support apparatus 10, the servomotor 30, and the controller 80 in a communicable manner with any wired connection scheme or any wireless connection scheme. For example, the development support apparatus 10 and the servo driver 20 are connected with any communication cable, or for example, a universal serial bus (USB) cable. The servo driver 20 and the servomotor 30 may be connected with a dedicated cable. The servo driver 20 and the controller 80 may be connected with, for example, EtherCAT (registered trademark).

The control system 1 including the development support apparatus 10 has been briefly described with reference to Fig. 2. To facilitate understanding of the development support apparatus 10, the development support apparatus 90 known in the art will now be described with reference to Figs. 9 and 10. The development support apparatus 90 known in the art is used in the same environment as for the control system 1. More specifically, the development support apparatus 90 known in the art is connected to a servo driver 21 in a communicable manner, and sets and adjusts control parameters stored in the servo driver 21 in the same manner as the development support apparatus 10 according to one embodiment of the present invention. The servo driver 21 stores control parameters set and adjusted by the development support apparatus 90 known in the art. The servo driver 21 drives the servomotor 30 and controls the driving status of the servomotor 30 in accordance with the control parameters.

### Known Development Support Apparatus

Fig. 9 is a schematic diagram showing the development support apparatus 90 known in the art. The development support apparatus 90 automatically adjusts control parameters (more specifically, a position gain and a velocity gain) used in the servo driver 21 to optimize the responsiveness of the servo driver 21. The development support apparatus 90 includes a gain adjustment unit 900 known in the art. The gain adjustment unit 900 known in the art includes a position gain setting unit 901, which sets and adjusts the position gain, and a velocity gain setting unit 902, which sets and adjusts the velocity gain. The development support apparatus 90 known in the art improves the responsivity by gradually increasing the position gain used in a position controller 211 and the velocity gain used in a velocity controller 212 to determine the optimum gains (the position gain and the velocity gain).

The servo driver 21 uses the control parameters set by the development support apparatus 90 known in the art (more specifically, the position gain and the velocity gain) and the internally estimated control parameter (more specifically, the inertia value of the load machine 40, and of the servomotor 30) to control the servomotor 30. More specifically, the servo driver 21 uses the position gain and the velocity gain set by the development support apparatus 90 known in the art and the internally estimated inertia value to cause the servomotor 30 to drive the load machine 40. The servo driver 21 includes the position controller 211, the velocity controller 212, a torque controller 213, a differentiator 214, and an inertia estimation unit 215.

The position controller 211 performs, for example, proportional control (P control). More specifically, the position controller 211 outputs a velocity command v_{cmd} based on a positional deviation of a position command p_{cmd}, which is provided from an external source (e.g., from a user), from a feedback position p_{fb}, which is obtained from an encoder 50. The position controller 211 has a position proportional gain Kₚₚ, which serves as a control parameter. The relationship between the position command p_{cmd}, the feedback position p_{fb}, the velocity command v_{cmd}, and the position proportional gain Kₚₚ can be written as: v_{cmd} = Kₚₚ * (p_{cmd} - p_{fb}).

The velocity controller 212 performs, for example, proportional integral control (PI control). More specifically, the velocity controller 212 outputs a torque command τ_{cmd} based on a velocity deviation of the velocity command v_{cmd} from a feedback velocity v_{fb} (detected velocity) calculated by the differentiator 214 based on the feedback position p_{fb} obtained from the encoder 50. The velocity controller 212 has a velocity proportional gain Kᵥₚ, a velocity integral gain Kᵥᵢ, and an inertia set value J_{c} as control parameters. The relationship between the velocity command v_{cmd}, the feedback velocity v_{fb}, the torque command τ_{cmd}, the velocity proportional gain Kᵥₚ, the velocity integral gain Kᵥᵢ, and the inertia set value J_{c} can be written as: τ_{cmd} = J_{c} * Kᵥₚ * (1 + Kᵥᵢ/s) * (v_{cmd} - v_{fb}), where the inertia set value J_{c} is the inertia value of the load machine 40 (and the servomotor 30) estimated by the inertia estimation unit 215 (described later), and s is the Laplace operator.

The torque controller 213 controls the servomotor 30 based on the torque command τ_{cmd} generated by the velocity controller 212. The differentiator 214 calculates a feedback velocity v_{fb} based on the feedback position p_{fb} obtained from the encoder 50, and transmits information indicating the calculated feedback velocity v_{fb} to the inertia estimation unit 215.

The inertia estimation unit 215 estimates the inertia value of the load machine 40 (and the servomotor 30) based on the feedback velocity v_{fb} (detected velocity) and the torque provided by the torque controller 213 to the servomotor 30 based on the torque command τ_{cmd}. More specifically, the inertia estimation unit 215 estimates the inertia value of the load machine 40 (and the servomotor 30) based on the feedback velocity v_{fb} and the torque provided to the servomotor 30.

Hereafter, a period during which the inertia estimation unit 215 is yet to determine (estimate) the actual inertia value (real inertia value Jₚ) of the load machine 40 (and the servomotor 30) may be referred to as an unadjusted period. The inertia value of the load machine 40 (and the servomotor 30) estimated by the inertia estimation unit 215 in the unadjusted period may be referred to as the initial inertia value.

The servo driver 21 uses, as appropriate, the inertia value of the load machine 40 (and the servomotor 30) estimated by the inertia estimation unit 215 as a control parameter for controlling the servomotor 30. More specifically, the inertia value of the load machine 40 (and the servomotor 30) estimated by the inertia estimation unit 215 is used by the velocity controller 212 as an inertia set value J_{c}.

The encoder 50 detects the position of the servomotor 30, and for example, the rotational angle of the servomotor 30. The encoder 50 transmits information indicating the detected position to the servo driver 21. The encoder 50 may also detect the velocity of the servomotor 30 and transmit information indicating the detected velocity to the servo driver 21. In this case, the servo driver 21 may not include the differentiator 214, which calculates the velocity of the servomotor 30 based on the position of the servomotor 30 detected by the encoder 50.

A command for operating the servomotor 30 may be provided through the setting performed by the development support apparatus 90 known in the art or based on an input from an upper controller (not shown) (e.g., the controller 80 in Fig. 2).

Fig. 10 is a flowchart showing the processing performed by the development support apparatus 90 known in the art. More specifically, Fig. 10 is a flowchart showing an adjustment process implemented by the development support apparatus 90 known in the art to adjust the position gain and the velocity gain (adjustment process). The development support apparatus 90 known in the art first performs the initial setting of the control parameters (S910). More specifically, the development support apparatus 90 known in the art transmits information indicating the initial values of the position gain and the velocity gain to the servo driver 21.

Subsequently, the development support apparatus 90 known in the art provides a command for the servo driver 21 to drive and position the servomotor 30 (as a trial) (S920). More specifically, the development support apparatus 90 known in the art causes the servo driver 21 to operate the servomotor 30 using the received initial values of the position gain and the velocity gain. The servomotor 30 thus drives the load machine 40. The development support apparatus 90 known in the art (or the servo driver 21) measures the responsiveness (S930). More specifically, the development support apparatus 90 obtains the results of the positioning operation performed using the initial values of the position gain and the velocity gain from, for example, the encoder 50. The development support apparatus 90 determines whether the responsiveness is optimum based on the measured responsiveness (e.g., the positioning results obtained from the encoder 50) (S940).

When determining that the responsiveness is not optimum (No in S940), the development support apparatus 90 increases the gains (the position gain and the velocity gain) (S950). More specifically, the development support apparatus 90 known in the art transmits, to the servo driver 21, information indicating the position gain and the velocity gain set higher than those corresponding to the responsiveness that has been determined not to be optimum. The processing from S920 to S940 is repeated. More specifically, the development support apparatus 90 known in the art improves the responsivity of the servo driver 21 by gradually increasing the position gain and the velocity gain. When determining that the responsiveness is optimum (Yes in S940), the development support apparatus 90 ends the adjustment, or in other words determines the optimum gains (the position gain and the velocity gain).

The development support apparatus 90 known in the art improves the responsivity by gradually increasing the position gain (specifically the position proportional gain Kₚₚ) and the velocity gain (specifically the velocity proportional gain Kᵥₚ and the velocity integral gain Kᵥᵢ), and ends the adjustment when the responsiveness is optimum.

The inertia value of the load machine 40 (and the servomotor 30) is estimated by the inertia estimation unit 215 in the servo driver 21 in parallel with the processing of the development support apparatus 90 known in the art, for example, the processing in S930. In other words, the inertia estimation unit 215 estimates the inertia value of the load machine 40 (and the servomotor 30) and updates the inertia set value J_{c} used by the velocity controller 212 independently of the processing for adjusting the position gain and the velocity gain performed by the development support apparatus 90 known in the art.

As described above, the values of the position gain and the velocity gain of the control parameters used in the servo driver 21 are set by the development support apparatus 90 known in the art. However, among the control parameters used in the servo driver 21, the inertia set value J_{c} is automatically estimated in the servo driver 21, in particular, estimated by the inertia estimation unit 215. In other words, the values of the position gain and the velocity gain of the control parameters used in the servo driver 21 are set and adjusted by the development support apparatus 90 known in the art independently of the inertia value of the load machine 40 (and the servomotor 30) estimated by the inertia estimation unit 215 in the servo driver 21.

When the inertia estimation unit 215 is yet to determine the actual inertia value (real inertia value Jₚ) of the load machine 40 (and the servomotor 30), the situations described below may occur. When the inertia value of the load machine 40 (and the servomotor 30) estimated by the inertia estimation unit 215 (the inertia set value J_{c} used by the velocity controller 212) greatly deviates from the characteristics of the actual control target (e.g., the actual inertia value, or the real inertia value Jₚ, of the load machine 40, and of the servomotor 30), the stability of the position control performed in the servo driver 21 may decrease. This may cause a large overshoot during the adjustment.

Additionally, changing the inertia set value J_{c} set in the servo driver 21, or the inertia value of the load machine 40 (and the servomotor 30) estimated by the inertia estimation unit 215, may suddenly change the control characteristics of the servo driver 21. This may cause technical issues such as an oscillation of the motor and a sudden change in its operation during such adjustment. In particular, when the inertia estimation unit 215 changes the estimated inertia value of the load machine 40 (and the servomotor 30), the inertia set value J_{c} used by the velocity controller 212 may be changed. This may suddenly change the control characteristics of the velocity controller 212.

These issues for the development support apparatus 90 known in the art described briefly above may be specifically classified into two issues (issues 1 and 2).

### Issue 1 with Known Technique

During adjustment of the control parameters, the development support apparatus 90 known in the art sets the position gain (e.g., the position proportional gain Kₚₚ) and the velocity gain (e.g., the velocity proportional gain Kᵥₚ and the velocity integral gain Kᵥᵢ) transmitted to the servo driver 21 in accordance with, for example, a parameter table. The parameter table used by the development support apparatus 90 known in the art is designed to provide gain combinations (the position gain and the velocity gain) that stabilize the position control performed in the servo driver 21. However, when the inertia set value J_{c} in an unadjusted period (or when the inertia estimation unit 215 is yet to determine the actual inertia value, or the real inertia value Jₚ, of the load machine 40, and of the servomotor 30) greatly deviates from the actual machine characteristics (e.g., the real inertia value Jₚ), the stability of the position control may decrease as unintended by the parameter table.

### Issue 2 with Known Technique

When the inertia estimation unit 215 included in the servo driver 21 automatically updates the inertia set value J_{c} to a larger value, the characteristics of the velocity controller 212 in the servo driver 21 may change suddenly. This may cause unfavorable phenomena such as an oscillation of the servomotor 30 (load machine 40) and a sudden change in its operation.

In response to the issue 1 with the development support apparatus 90 known in the art, the development support apparatus 10 according to one embodiment of the present invention sets the gains used before the inertia is estimated (or in the unadjusted period) to stabilize the position control performed in the servo driver 20 independently of any large deviation of the unadjusted inertia set value J_{c} from the actual machine characteristics (the actual inertia value, or the real inertia value Jₚ, of the load machine 40, and of the servomotor 30). The development support apparatus 10 sets the position gain and the velocity gain in an unadjusted period to stabilize the position control performed in the servo driver 20 independently of any large deviation of the actual machine characteristics from an inertia set value J_{c} set when the inertia estimation unit 215 is yet to determine the real inertia value Jₚ of the load machine 40 (and the servomotor 30). In other words, the development support apparatus 10 adjusts the inertia value, the position gain, and the velocity gain to achieve the constantly stable relationship between them both before and during the adjustment of the control parameters. Thus, the development support apparatus 10 can adjust the control parameters such as the inertia value, the position gain, and the velocity gain in a safe manner, and perform control that is less likely to cause an overshoot.

To facilitate understanding of the development support apparatus 10, the development support apparatus 10 will now be described briefly. The development support apparatus 10 adjusts the control parameters for the servomotor 30. The development support apparatus 10 includes a gain adjustment unit 100, which adjusts a position proportional gain Kₚₚ and a velocity proportional gain Kᵥₚ in parallel. The position proportional gain Kₚₚ is used in position control performed in the servo driver 20 for controlling the servomotor 30. The velocity proportional gain Kᵥₚ is used in velocity control performed in the servo driver 20. When the servo driver 20 is yet to determine the actual inertia value Jₚ of the load machine 40 (and the servomotor 30), the gain adjustment unit 100 sets the ratio of the position proportional gain Kₚₚ to the velocity proportional gain Kᵥₚ to a value smaller than the ratio set when the servo driver 20 has determined the actual inertia value Jₚ of the load machine 40 (and the servomotor 30).

When the actual inertia value Jₚ of the load machine 40 (and the servomotor 30) is yet to be determined, the development support apparatus 10 with this structure sets the ratio of the position proportional gain Kₚₚ to the velocity proportional gain Kᵥₚ to a value smaller than the ratio set when the servo driver 20 has determined the actual inertia value Jₚ of the load machine 40 (and the servomotor 30). In this case, the damping coefficient ζ in a transfer function for the position control performed in the servo driver 20 is greater than a damping coefficient ζ used when the actual inertia value Jₚ of the load machine 40 (and the servomotor 30) has been determined. The development support apparatus 10 thus enables the servo driver 20 to perform control that is less likely to cause an overshoot when the actual inertia value Jₚ of the load machine 40 (and the servomotor 30) is yet to be determined.

When the servo driver 20 is yet to determine the actual inertia value Jₚ of the load machine 40 (and the servomotor 30), the gain adjustment unit 100 in the development support apparatus 10 sets the ratio (of the position proportional gain Kₚₚ to the velocity proportional gain Kᵥₚ) to a value smaller than the ratio set when the servo driver 20 has determined the actual inertia value Jₚ of the load machine 40 (and the servomotor 30) in accordance with the estimated maximum value Jₘₐₓ of the inertia value of the load machine 40 (and the servomotor 30).

The development support apparatus 10 with this structure sets the ratio in accordance with the estimated maximum value Jₘₐₓ of the inertia value of the load machine 40 (and the servomotor 30). The development support apparatus 10 sets the ratio for the least stable actual control based on the estimated maximum value Jₘₐₓ of the inertia value of the load machine 40 (and the servomotor 30). The development support apparatus 10 thus enables the servo driver 20 to perform control that is less likely to cause an overshoot when the actual inertia value Jₚ of the load machine 40 (and the servomotor 30) is yet to be determined.

The development support apparatus 10 further includes an apparatus reception unit 112 (inertia reception unit) that receives, from the servo driver 20, the inertia value (estimated by an inertia estimation unit 209, or the inertia set value J_{c}) of the load machine 40 (and the servomotor 30) controlled by the servo driver 20. In a period in which the apparatus reception unit 112 receives, from the servo driver 20, the initial inertia value Jo used when the actual inertia value Jₚ of the load machine 40 (and the servomotor 30) is yet to be determined, the gain adjustment unit 100 sets the ratio to a value obtained by multiplying a value set when the servo driver 20 has determined the actual inertia value Jₚ of the load machine 40 (and the servomotor 30) by the initial inertia value Jo divided by the maximum value Jₘₐₓ.

The development support apparatus 10 with this structure sets the ratio to a value obtained by multiplying the value set when the actual inertia value Jₚ of the load machine 40 (and the servomotor 30) has been determined by the initial inertia value Jo divided by the maximum value Jₘₐₓ. In this case, the development support apparatus 10 can have a damping coefficient ζ equal to or greater than a predetermined value independently of any deviation of the initial inertia value Jo from the actual inertia value Jₚ. The development support apparatus 10 thus enables the servo driver 20 to perform control without causing an overshoot when the actual inertia value Jₚ of the load machine 40 (and the servomotor 30) is yet to be determined.

The gain adjustment unit 100 gradually increases the position proportional gain Kₚₚ and the velocity proportional gain Kᵥₚ from initial values until optimum response is obtained.

The development support apparatus 10 with this structure gradually increases the position proportional gain Kₚₚ and the velocity proportional gain Kᵥₚ from the initial values to adjust the gains. The development support apparatus 10 thus enables the servo driver 20 to perform control with a gradually increasing amount of control, and to perform control without causing an overshoot.

The development support apparatus 10 described briefly above and the servo driver 20 for controlling the driving status of the servomotor 30 using the control parameters set (adjusted) by the development support apparatus 10 will now be described in detail with reference to Figs. 1, 3, and 4.

### Details of Development Support Apparatus According to Embodiment of Present Invention

Fig. 1 is a block diagram showing the main components of the development support apparatus 10. The development support apparatus 10 automatically adjusts the control parameters used in the servo driver 20 to optimize the responsiveness of the servo driver 20. The development support apparatus 10 includes the gain adjustment unit 100 and an apparatus communication unit 110. The gain adjustment unit 100 gradually increases the position gain (position proportional gain Kₚₚ) and the velocity gain (velocity proportional gain Kᵥₚ) from the initial values until optimum response is obtained.

In the example described below, the position gain and the velocity gain adjusted and controlled by the development support apparatus 10 (gain adjustment unit 100) and used by the servo driver 20 are the position proportional gain Kₚₚ and the velocity proportional gain Kᵥₚ. Unless otherwise specified, the position gain hereafter refers to the position proportional gain Kₚₚ, and the velocity gain hereafter refers to the velocity proportional gain Kᵥₚ.

When the servo driver 20 is yet to determine the actual inertia value Jₚ of the load machine 40 (and the servomotor 30), or more specifically, in the period in which the apparatus reception unit 112 receives, from the servo driver 20, the initial inertia value Jo used when the actual inertia value Jₚ of the load machine 40 (and the servomotor 30) is yet to be determined, the gain adjustment unit 100 sets the ratio of the position proportional gain Kₚₚ to the velocity proportional gain Kᵥₚ (hereafter simply referred to as the velocity-position ratio) in the manner described below. The gain adjustment unit 100 sets the velocity-position ratio to a value smaller than the ratio set when the servo driver 20 has determined the actual inertia value Jₚ of the load machine 40 (and the servomotor 30). In particular, the gain adjustment unit 100 sets the velocity-position ratio to a value smaller than the ratio set when the servo driver 20 has determined the actual inertia value Jₚ of the load machine 40 (and the servomotor 30) in accordance with the estimated maximum value Jₘₐₓ of the inertia value of the load machine 40 (and the servomotor 30). The gain adjustment unit 100 sets, for example, the ratio of the position proportional gain Kₚₚ to the velocity proportional gain Kᵥₚ to a value obtained by multiplying the value set when the servo driver 20 has determined the actual inertia value Jₚ of the load machine 40 (and the servomotor 30) by the initial inertia value J₀ divided by the maximum value Jₘₐₓ (the estimated maximum value of the inertia value of the load machine 40, and of the servomotor 30).

The gain adjustment unit 100 includes a position gain setting unit 101, a velocity gain setting unit 102, a position-velocity ratio adjustment unit 103, an inertia value determination unit 104, and an inertia value obtaining unit 105. The position gain setting unit 101 generates the position gain used by a position controller 204 included in the servo driver 20. The velocity gain setting unit 102 generates the velocity gain used by a velocity controller 205 included in the servo driver 20. The position gain and the velocity gain generated by the position gain setting unit 101 and the velocity gain setting unit 102 are transmitted to the position-velocity ratio adjustment unit 103.

The position-velocity ratio adjustment unit 103 adjusts the ratio between the position gain generated by the position gain setting unit 101 and the velocity gain generated by the velocity gain setting unit 102. The position-velocity ratio adjustment unit 103 sets the velocity-position ratio, or specifically adjusts the values of the position gain and the velocity gain to allow the ratio of the position gain to the velocity gain (or the velocity-position ratio) to fall within a predetermined range.

The position-velocity ratio adjustment unit 103 adjusts the velocity-position ratio particularly based on whether the servo driver 20 has determined the actual inertia value Jₚ of the load machine 40 (and the servomotor 30). More specifically, the position-velocity ratio adjustment unit 103 adjusts the velocity-position ratio based on whether the inertia value obtained by the inertia value obtaining unit 105 (apparatus reception unit 112) from the servo driver 20 is the initial inertia value J₀ used when the servo driver 20 is yet to determine the actual inertia value Jₚ of the load machine 40 (and the servomotor 30) or the actual inertia value Jₚ of the load machine 40 (and the servomotor 30) determined by the inertia estimation unit 209.

When receiving the determination result indicating that the servo driver 20 has not determined the actual inertia value Jₚ of the load machine 40 (and the servomotor 30) from the inertia value determination unit 104, or specifically when the inertia value obtained by the inertia value obtaining unit 105 is the initial inertia value J₀, the position-velocity ratio adjustment unit 103 sets the velocity-position ratio in the manner described below. The position-velocity ratio adjustment unit 103 sets the velocity-position ratio to a value smaller than the ratio set when the servo driver 20 has determined the actual inertia value Jₚ of the load machine 40 (and the servomotor 30), or in particular to a value smaller than the ratio set when the actual inertia value Jₚ has been determined in accordance with the estimated maximum value Jₘₐₓ of the inertia value of the load machine 40 (and the servomotor 30). The position-velocity ratio adjustment unit 103 sets, for example, the velocity-position ratio to a value obtained by multiplying the value set when the servo driver 20 has determined the actual inertia value Jₚ of the load machine 40 (and the servomotor 30) by the initial inertia value Jo divided by the maximum value Jₘₐₓ.

The position-velocity ratio adjustment unit 103 transmits the position gain (position proportional gain Kₚₚ) and the velocity gain (velocity proportional gain Kᵥₚ) adjusted to achieve the intended velocity-position ratio to the servo driver 20 through an apparatus transmission unit 111. To achieve the intended velocity-position ratio (the ratio of the position proportional gain Kₚₚ to the velocity proportional gain Kᵥₚ), the position-velocity ratio adjustment unit 103 may fix the value of the position gain (position proportional gain Kₚₚ) generated by the position gain setting unit 101 and adjust the value of the velocity gain (velocity proportional gain Kᵥₚ) generated by the velocity gain setting unit 102. To achieve the intended velocity-position ratio, the position-velocity ratio adjustment unit 103 may fix the value of the velocity proportional gain Kᵥₚ generated by the velocity gain setting unit 102 and adjust the value of the position proportional gain Kₚₚ generated by the position gain setting unit 101. To achieve the intended velocity-position ratio, the position-velocity ratio adjustment unit 103 may adjust the value of the position proportional gain Kₚₚ generated by the position gain setting unit 101 and the value of the velocity proportional gain Kᵥₚ generated by the velocity gain setting unit 102 as appropriate. The position gain (position proportional gain Kₚₚ) and the velocity gain (velocity proportional gain Kᵥₚ) adjusted by the position-velocity ratio adjustment unit 103 to achieve the intended velocity-position ratio are to be transmitted to the servo driver 20 through the apparatus transmission unit 111.

When receiving the determination result indicating that the servo driver 20 has determined the actual inertia value Jₚ of the load machine 40 (and the servomotor 30) from the inertia value determination unit 104, or specifically when the inertia value obtained by the inertia value obtaining unit 105 is the actual inertia value Jₚ of the load machine 40 (and the servomotor 30) determined by the servo driver 20, the position-velocity ratio adjustment unit 103 (gain adjustment unit 100) performs the processing described below. The gain adjustment unit 100 (position-velocity ratio adjustment unit 103) gradually increases (raises) the values of the position proportional gain Kₚₚ generated by the position gain setting unit 101 and the velocity proportional gain Kᵥₚ generated by the velocity gain setting unit 102 until optimum response from the servo driver 20 is obtained. The gain adjustment unit 100 (position-velocity ratio adjustment unit 103) improves the responsivity of the servo driver 20 by gradually increasing the position proportional gain Kₚₚ and the velocity proportional gain Kᵥₚ to determine the optimum set values (optimum position proportional gain Kₚₚ and velocity proportional gain Kᵥₚ).

The processing performed by the position-velocity ratio adjustment unit 103 described above can now be summarized. The position-velocity ratio adjustment unit 103 obtains the position gain generated by the position gain setting unit 101 and the velocity gain generated by the velocity gain setting unit 102 from the position gain setting unit 101 and the velocity gain setting unit 102. The position-velocity ratio adjustment unit 103 also obtains, from the inertia value determination unit 104, the result of determination as to whether the servo driver 20 has determined the actual inertia value Jₚ of the load machine 40 (and the servomotor 30), or in other words whether the inertia value obtained by the inertia value obtaining unit 105 (apparatus reception unit 112) is the initial inertia value J₀ or the actual inertia value Jₚ. The position-velocity ratio adjustment unit 103 further obtains the initial inertia value J₀ and the estimated maximum value Jₘₐₓ of the inertia value of the load machine 40 (and the servomotor 30) or the actual inertia value Jₚ of the load machine 40 (and the servomotor 30) from the inertia value obtaining unit 105.

When the inertia value obtained by the inertia value obtaining unit 105 is the initial inertia value J₀, the position-velocity ratio adjustment unit 103 adjusts the values of the position gain and the velocity gain to allow the ratio between the position gain (position proportional gain Kₚₚ) and the velocity gain (velocity proportional gain Kᵥₚ) (velocity-position ratio) to fall within a predetermined range. The position-velocity ratio adjustment unit 103 transmits information indicating the adjusted position gain and the adjusted velocity gain to the servo driver 20 through the apparatus transmission unit 111 to allow the servo driver 20 to use these adjusted gains as control parameters.

The position-velocity ratio adjustment unit 103 sets the velocity-position ratio to a value smaller than the ratio set when the servo driver 20 has determined the actual inertia value Jₚ of the load machine 40 (and the servomotor 30), or in particular to a value smaller than the ratio set when the actual inertia value Jₚ has been determined in accordance with the estimated maximum value Jₘₐₓ of the inertia value of the load machine 40 (and the servomotor 30). The position-velocity ratio adjustment unit 103 sets, for example, the velocity-position ratio to a value obtained by multiplying the value set when the servo driver 20 has determined the actual inertia value Jₚ of the load machine 40 (and the servomotor 30) by the initial inertia value Jo divided by the maximum value Jₘₐₓ. As described above, the position-velocity ratio adjustment unit 103 obtains, for example, the initial inertia value Jo, and the estimated maximum value Jₘₐₓ of the inertia value of the load machine 40 (and the servomotor 30) from the inertia value obtaining unit 105.

The inertia value determination unit 104 determines whether the servo driver 20 has determined the actual inertia value Jₚ of the load machine 40 (and the servomotor 30). More specifically, the inertia value determination unit 104 determines whether the inertia value obtained by the inertia value obtaining unit 105 (apparatus reception unit 112) from the servo driver 20 is the initial inertia value Jo used when the servo driver 20 is yet to determine the actual inertia value Jₚ of the load machine 40 (and the servomotor 30) or the actual inertia value Jₚ of the load machine 40 (and the servomotor 30) determined by the inertia estimation unit 209. The inertia value determination unit 104 transmits the determination result to the position-velocity ratio adjustment unit 103.

The inertia value determination unit 104 obtains, for example, identification information (described later) from the servo driver 20 through the apparatus reception unit 112, and uses the identification information to determine whether the inertia value obtained by the inertia value obtaining unit 105 from the servo driver 20 is the initial inertia value Jo or the actual inertia value Jₚ. The identification information is output from the servo driver 20 and is used to determine whether the inertia estimation unit 209 in the servo driver 20 has determined (estimated) the actual inertia value Jₚ of the load machine 40 (and the servomotor 30). Any other method may be used to allow the inertia value determination unit 104 to determine whether the servo driver 20 has determined the actual inertia value Jₚ of the load machine 40 (and the servomotor 30) and transmit the determination result to the position-velocity ratio adjustment unit 103. For example, the inertia value determination unit 104 may determine that the servo driver 20 has determined the actual inertia value Jₚ of the load machine 40 (and the servomotor 30) when inertia values obtained by the inertia value obtaining unit 105 (apparatus reception unit 112) at predetermined time intervals from the servo driver 20 are the same value at least a predetermined number of times. In other words, the inertia value determination unit 104 may determine that the inertia value obtained by the inertia value obtaining unit 105 is the actual inertia value Jₚ of the load machine 40 (and the servomotor 30) when the above condition is satisfied.

The inertia value obtaining unit 105 transmits, to the position-velocity ratio adjustment unit 103, information indicating the inertia value received by the apparatus reception unit 112 from the servo driver 20. After the inertia estimation unit 209 in the servo driver 20 has determined the actual inertia value Jₚ of the load machine 40 (and the servomotor 30), the inertia value obtained by the inertia value obtaining unit 105 (apparatus reception unit 112) from the servo driver 20 is the determined actual inertia value Jₚ of the load machine 40 (and the servomotor 30). When the servo driver 20 is yet to determine the actual inertia value Jₚ of the load machine 40 (and the servomotor 30), the inertia value obtained by the inertia value obtaining unit 105 from the servo driver 20 is the estimated initial inertia value Jo of the load machine 40 (and the servomotor 30). In this period, the inertia value obtaining unit 105 may also obtain the initial inertia value J₀, and the estimated maximum value Jₘₐₓ of the inertia value of the load machine 40 (and the servomotor 30) from the servo driver 20.

The inertia value obtaining unit 105 that has obtained the actual inertia value Jₚ of the load machine 40 (and the servomotor 30) transmits information indicating the obtained actual inertia value Jₚ to the position-velocity ratio adjustment unit 103. The inertia value obtaining unit 105 that has not obtained the actual inertia value Jₚ of the load machine 40 (and the servomotor 30) transmits information indicating the initial inertia value J₀ (or the initial inertia value J₀, and the estimated maximum value Jₘₐₓ of the inertia value of the load machine 40, and of the servomotor 30) to the position-velocity ratio adjustment unit 103.

The apparatus communication unit 110 includes the apparatus transmission unit 111 and the apparatus reception unit 112. The apparatus transmission unit 111 transmits the position proportional gain Kₚₚ and the velocity proportional gain Kᵥₚ set by the gain adjustment unit 100 to the servo driver 20. The apparatus reception unit 112 receives, from the servo driver 20, the inertia value of the load machine 40 (and the servomotor 30) estimated by the inertia estimation unit 209 in the servo driver 20. The apparatus reception unit 112 may further receive, from the servo driver 20, information (identification information) used to determine whether the inertia value received from the servo driver 20 is the initial inertia value J₀ used when the inertia estimation unit 209 is yet to determine the actual inertia value Jₚ of the load machine 40 (and the servomotor 30) or the actual inertia value Jₚ of the load machine 40 (and the servomotor 30) determined by the inertia estimation unit 209.

In this example, before the inertia estimation unit 209 in the servo driver 20 determines the actual inertia value Jₚ of the load machine 40 (and the servomotor 30), the servo driver 20 may transmit the information (identification information) indicating that the inertia estimation unit 209 has not determined the actual inertia value Jₚ of the load machine 40 (and the servomotor 30), and the initial inertia value J₀ of the load machine 40 (and the servomotor 30) to the development support apparatus 10. However, the development support apparatus 10 may not obtain the initial inertia value J₀ of the load machine 40 (and the servomotor 30) (or the initial inertia value J₀, and the estimated maximum value Jₘₐₓ of the inertia value of the load machine 40, and of the servomotor 30) from the servo driver 20.

For example, before the inertia estimation unit 209 determines the actual inertia value Jₚ of the load machine 40 (and the servomotor 30), the apparatus reception unit 112 may simply receive the information (identification information) indicating that the inertia estimation unit 209 has not determined the actual inertia value Jₚ of the load machine 40 (and the servomotor 30). The apparatus reception unit 112 may then notify the inertia value obtaining unit 105 that the apparatus reception unit 112 has simply received the identification information indicating that the inertia estimation unit 209 has not determined the actual inertia value Jₚ of the load machine 40 (and the servomotor 30), and the inertia value obtaining unit 105 may then perform the processing described below. The inertia value obtaining unit 105 may transmit information indicating the initial inertia value J₀ set as appropriate (and the estimated maximum value Jₘₐₓ of the inertia value of the load machine 40, and of the servomotor 30) to the position-velocity ratio adjustment unit 103.

### Details of Servo Driver Communicating with Development Support Apparatus According to Embodiment of Present Invention

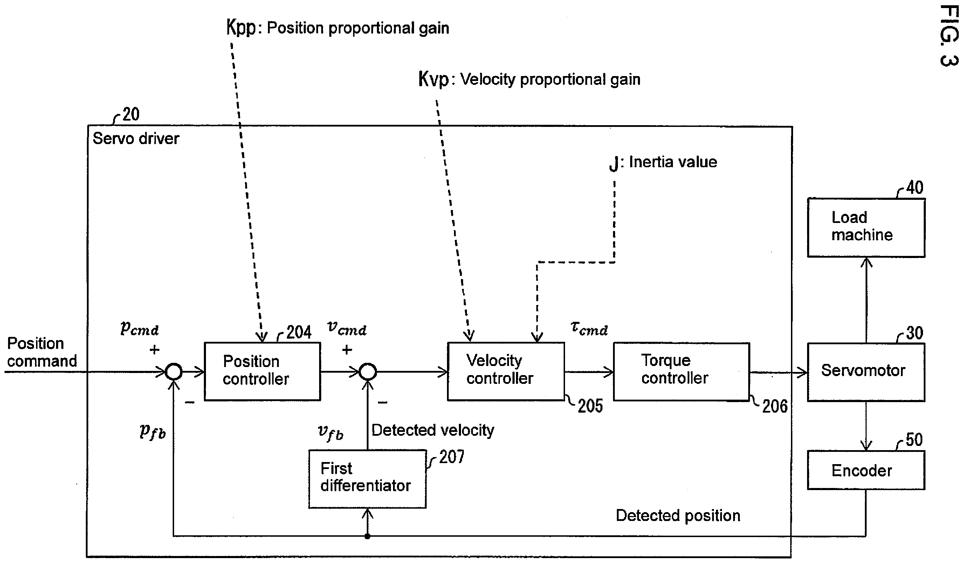

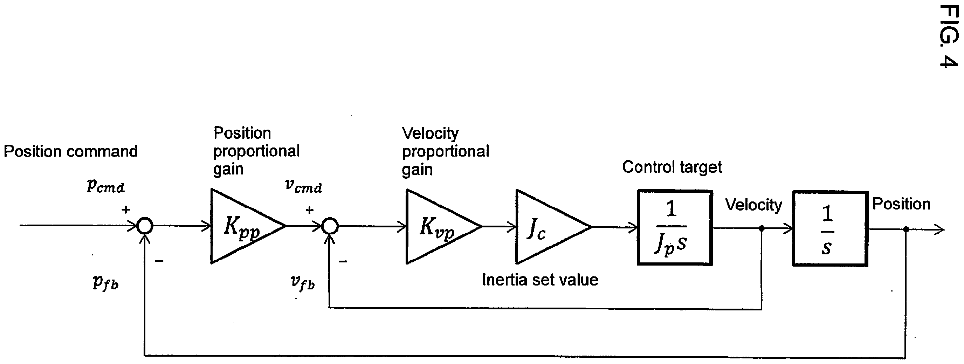

Fig. 3 is a diagram showing the correspondence between the transfer elements and the components of the servo driver 20 communicating with the development support apparatus 10. Fig. 4 is a block diagram of the servo driver 20.

The servo driver 20 controls the servomotor 30 using the control parameters set and adjusted by the development support apparatus 10 (more specifically, the position gain and the velocity gain) and the control parameter internally estimated by the servo driver 20 (more specifically, the inertia value of the load machine 40, and of the servomotor 30) to drive the load machine 40. A command for the servo driver 20 for operating the motor may be provided, for example, through the setting performed by the development support apparatus 10 or based on an input from the controller 80 illustrated in Fig. 2.

The servo driver 20 includes a driver communication unit 201, a storage unit 202, the position controller 204, the velocity controller 205, a torque controller 206, a first differentiator 207, a second differentiator 208, and the inertia estimation unit 209.

The driver communication unit 201 communicates with another apparatus such as the development support apparatus 10 by wireless or wired communications to exchange predetermined data with each other. More specifically, the driver communication unit 201 transmits the inertia value of the load machine 40 (and the servomotor 30) estimated by the inertia estimation unit 209 to the development support apparatus 10. The driver communication unit 201 also receives, from the development support apparatus 10, the position gain (position proportional gain Kₚₚ) and the velocity gain (velocity proportional gain Kᵥₚ) set by the development support apparatus 10. The driver communication unit 201 stores the position gain and the velocity gain received from the development support apparatus 10 into a control parameter table 203.

The storage unit 202 stores various pieces of data used by the servo driver 20. The storage unit 202 stores programs executed by the servo driver 20 (in particular, the position controller 204, the velocity controller 205, the torque controller 206, the first differentiator 207, the second differentiator 208, and the inertia estimation unit 209), namely, (1) a control program, (2) an operating system (OS) program, and (3) application programs for implementing various functions, and (4) various pieces of data that are read when the application programs are executed. The data for the programs (1) to (4) is stored in, for example, a nonvolatile storage medium, such as a read only memory (ROM), a flash memory, an erasable programmable ROM (EPROM), an electrically erasable programmable ROM (EEPROM, a registered trademark), or a hard disk drive (HDD). The storage unit 202 also stores the control parameter table 203.

The control parameter table 203 stores control parameters used for controlling the servo driver 20 including the position gain (position proportional gain Kₚₚ), the velocity gain (velocity proportional gain Kᵥₚ), and the inertia value (inertia set value J_{c}), which are used by the servo driver 20 to control the driving status of the servomotor 30.

As shown in Figs. 3 and 4, the position controller 204 performs, for example, proportional control (P control). More specifically, the position controller 204 outputs a velocity command v_{cmd} based on a positional deviation of a position command p_{cmd}, which is provided from an external source (e.g., from a user), from a feedback position p_{fb}, which is obtained from the encoder 50. The position controller 204 obtains a position proportional gain Kₚₚ as a control parameter by referring to the control parameter table 203. The relationship between the position command pc_{md}, the feedback position p_{fb}, the velocity command v_{cmd}, and the position proportional gain Kₚₚ can be written as: v_{cmd} = Kₚₚ * (p_{cmd} - p_{fb}).

The velocity controller 205 performs, for example, proportional control (P control). More specifically, the velocity controller 205 outputs a torque command τ_{cmd} based on a velocity deviation of the velocity command v_{cmd} from a feedback velocity v_{fb} calculated by the first differentiator 207 based on the feedback position p_{fb} obtained from the encoder 50. The velocity controller 205 also obtains the velocity proportional gain Kᵥₚ and the inertia set value J_{c} as control parameters by referring to the control parameter table 203. The relationship between the velocity command v_{cmd}, the feedback velocity v_{fb}, the torque command τ_{cmd}, the velocity proportional gain Kᵥₚ, and the inertia set value J_{c} can be written as: τ_{cmd} = J_{c} * Kᵥₚ * (v_{cmd} - v_{fb}). Although the velocity controller 205 in this example performs proportional control (P control), the velocity controller 205 may not perform P control, and may perform PI control.

The torque controller 206 controls the servomotor 30 based on the torque command τ_{cmd} generated by the velocity controller 205. The first differentiator 207 calculates the feedback velocity v_{fb} based on the feedback position p_{fb} obtained from the encoder 50. The second differentiator 208 calculates the acceleration based on the feedback velocity v_{fb} calculated by the first differentiator 207, and transmits the calculated acceleration to the inertia estimation unit 209.

The inertia estimation unit 209 estimates the inertia value of the load machine 40 (and the servomotor 30) based on the acceleration calculated by the second differentiator 208 and the torque provided to the servomotor 30 by the torque controller 206 based on the torque command τ_{cmd}. The servo driver 20 uses, as appropriate, the estimation results obtained by the inertia estimation unit 209 as a control parameter (inertia set value J_{c}) used in the control performed by the servomotor 30. The estimation results obtained by the inertia estimation unit 209 are transmitted from the servo driver 20 to the development support apparatus 10 as the inertia set value J_{c}. The inertia estimation unit 209 stores the estimated inertia value of the load machine 40 (and the servomotor 30) into the control parameter table 203 as the inertia set value J_{c}.

As described above, when the inertia estimation unit 209 is yet to determine the real inertia value Jₚ of the load machine 40 (and the servomotor 30), the inertia set value J_{c} is equal to the initial inertia value Jo. When the inertia estimation unit 209 is yet to determine the real inertia value Jₚ, the servo driver 20 transmits, to the development support apparatus 10, information indicating the inertia set value J_{c} (or the initial inertia value Jo) and the estimated maximum value Jₘₐₓ of the inertia value of the load machine 40 (and the servomotor 30). When the inertia estimation unit 209 has determined the real inertia value Jₚ of the load machine 40 (and the servomotor 30), the servo driver 20 transmits information indicating the inertia set value J_{c} (or the real inertia value Jₚ) to the development support apparatus 10.

The encoder 50 detects the position of the servomotor 30, and for example, the rotational angle of the servomotor 30. The encoder 50 transmits information indicating the detected position to the servo driver 20. The encoder 50 may also detect the velocity of the servomotor 30 and may transmit information indicating the detected velocity to the servo driver 20. In this case, the servo driver 20 may not include the first differentiator 207, which calculates the velocity of the servomotor 30 based on the position of the servomotor 30 detected by the encoder 50.

### Setting Initial Values of Control Parameters

For the development support apparatus 10 and the servo driver 20 with the structures described above, the relationship (ratio) to be defined between the position proportional gain Kₚₚ and the velocity proportional gain Kᵥₚ adjusted by the position-velocity ratio adjustment unit 103 (gain adjustment unit 100) will now be described.

Assuming that the transfer function of the torque controller 206 is 1, and the load machine 40 and the servomotor 30, which are control targets, have the inertia value Jₚ of single inertia, a transfer function for the position control is written by Formula 1 with a second-order lag. $G = \frac{\frac{{J}_{c}}{{J}_{p}} ⋅ {K}_{pp} {K}_{vp}}{{s}^{2} + \frac{{J}_{c}}{{J}_{p}} ⋅ {K}_{vp} s + \frac{{J}_{c}}{{J}_{p}} ⋅ {K}_{pp} {K}_{vp}}$ Formula 1

In Formula 1, s is the Laplace operator, and J_{c} is the inertia set value of the velocity controller 205. The damping coefficient ζ is written by Formula 2 below. $ζ = \frac{1}{2} \sqrt{\frac{{J}_{c}}{{J}_{p}} ⋅ \frac{{K}_{vp}}{{K}_{pp}}}$ Formula 2

The relational expression of the position proportional gain Kₚₚ and the velocity proportional gain Kᵥₚ is defined using a constant α as Kₚₚ = Kᵥₚ/α. When the inertia set value J_{c} of the velocity controller 205 is equal to the inertia value Jₚ of the control targets (the load machine 40 and the servomotor 30), the transfer function written by Formula 1 is written by Formula 3 below. $G = \frac{{K}_{vp}^{2} / α}{{s}^{2} + {K}_{vp} s + {K}_{vp}^{2} / α}$ Formula 3

In this state, the damping coefficient ζ is a constant value written by Formula 4 below, allowing gain adjustment with position control performed in a constantly stable manner. More specifically, the position proportional gain Kₚₚ and the velocity proportional gain Kᵥₚ determined to satisfy the relationship written by Kₚₚ = Kᵥₚ/α allow position control to be performed in a constantly stable manner. The constant α may be, for example, any real number equal to or greater than 4. $ζ = \frac{1}{2} \sqrt{α}$ Formula 4

The range of the inertia value Jₚ of the control targets that can be driven (the load machine 40 and the servomotor 30) is defined as Formula 5 below. In the formula, Jₘₐₓ is the estimated maximum value of the inertia value of the load machine 40 (and the servomotor 30), and Jₘᵢₙ is the estimated minimum value of the inertia value of the load machine 40 (and the servomotor 30). This range defines the specifications of the servo driver 20 and the servomotor 30. ${J}_{min} \leq {J}_{p} \leq {J}_{max}$ Formula 5

The initial values of the position proportional gain Kₚₚ, the velocity proportional gain Kᵥₚ, and the inertia set value J_{c} (the initial velocity proportional gain Kᵥₚ₀ and the initial inertia set value Jo) are defined as Formula 6. $\begin{matrix}{J}_{c} = {J}_{0} \\ \begin{matrix}{K}_{vp} & = {K}_{vp 0} \\ {K}_{pp} & = \frac{{J}_{0}}{{J}_{max}} ⋅ \frac{{K}_{vp}}{α}\end{matrix}\end{matrix}$ Formula 6

When the control parameters are set as defined in Formula 6, the damping coefficient ζ written by Formula 2 is written by Formula 7 below. $\begin{matrix}\frac{1}{2} \sqrt{\frac{{J}_{0}}{{J}_{max}} ⋅ \frac{{K}_{vp 0}}{\frac{{J}_{0}}{{J}_{max}} ⋅ \frac{{K}_{vp 0}}{α}}} \leq ζ \leq \frac{1}{2} \sqrt{\frac{{J}_{0}}{{J}_{min}} ⋅ \frac{{K}_{vp 0}}{\frac{{J}_{0}}{{J}_{max}} ⋅ \frac{{K}_{vp 0}}{α}}} \\ \frac{1}{2} \sqrt{α} \leq ζ \leq \frac{1}{2} \sqrt{α} ⋅ \sqrt{\frac{{J}_{max}}{{J}_{min}}}\end{matrix}$ Formula 7

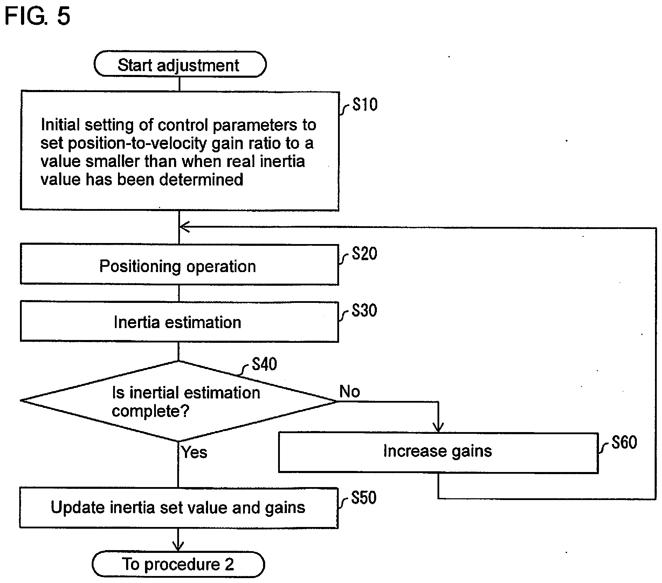

The damping coefficient ζ is equal to or greater than a predetermined value, independently of any deviation of the initial value of the inertia set value J_{c} from the inertia value Jₚ of the control targets (the load machine 40 and the servomotor 30). This stabilizes the position control. The processing performed by the development support apparatus 10 with the structure described in detail above will now be described with reference to Fig. 5. Processing Performed by Development Support Apparatus According to Embodiment of Present Invention

Fig. 5 is a flowchart showing the processing performed by the development support apparatus 10. More specifically, Fig. 5 is a flowchart showing an adjustment process implemented by the development support apparatus 10 to adjust the position gain (position proportional gain Kₚₚ) and the velocity gain (velocity proportional gain Kᵥₚ) (adjustment process). The development support apparatus 10 first performs the initial setting of the control parameters (the position gain and the velocity gain) to set the ratio of the position gain to the velocity gain to a value smaller than the ratio set when the real inertia value (the inertia value Jₚ of the load machine 40 and the servomotor 30) has been determined (S10). More specifically, the development support apparatus 10 transmits information indicating the initial values of the position gain and the velocity gain to the servo driver 20.

Subsequently, the development support apparatus 10 provides a command for the servo driver 20 to drive and position the servomotor 30 (as a trial) (S20). More specifically, the development support apparatus 10 causes the servo driver 20 to operate the servomotor 30 using the received initial values of the position gain and the velocity gain. The servomotor 30 thus drives the load machine 40. The development support apparatus 10 causes the servo driver 20 to measure the responsiveness.

In accordance with the measured responsiveness, the development support apparatus 10 causes the servo driver 20 to perform inertia estimation (S30). More specifically, the development support apparatus 10 causes the inertia estimation unit 209 included in the servo driver 20 to estimate the inertia value of the load machine 40 (and the servomotor 30) based on the positioning operation performed by the servo driver 20 using the initial values of the position gain and the velocity gain.

When the inertia estimation unit 209 has not completed the inertia estimation (No in S40), in other words, the inertia estimation unit 209 has not determined the actual inertia value Jₚ of the load machine 40 (and the servomotor 30), the development support apparatus 10 performs the processing described below. When the actual inertia value Jₚ of the load machine 40 (and the servomotor 30) is not correctly estimated (or cannot be determined), the gains (the position gain and the velocity gain) may be too low (small) to generate the acceleration and the torque used to estimate the inertia value. In this case, the development support apparatus 10 increases the gains (the position gain and the velocity gain) transmitted to the servo driver 20 (S60). More specifically, the development support apparatus 10 causes the servo driver 20 to set a larger position gain and a larger velocity gain. The development support apparatus 10 repeats the processing in S20 and S30. The development support apparatus 10 repeats the processing in S60, S20, and S30 until the inertia estimation unit 209 completes the inertia estimation, or in other words until the inertia estimation unit 209 determines the actual inertia value Jₚ.

When the inertia estimation unit 209 has completed the inertia estimation (Yes in S40), or in other words when the inertia estimation unit 209 has determined the actual inertia value Jₚ of the load machine 40 (and the servomotor 30), the development support apparatus 10 causes the servo driver 20 to update the inertia set value and the gains (S50). More specifically, the servo driver 20 stores the actual inertia value Jₚ of the load machine 40 (and the servomotor 30) determined by the inertia estimation unit 209 into the control parameter table 203. The servo driver 20 also stores the optimum gains (the position gain and the velocity gain) corresponding to the actual inertia value Jₚ of the load machine 40 (and the servomotor 30) into the control parameter table 203.

The control parameter adjustment method implemented by the development support apparatus 10 described above can now be summarized. The control parameter adjustment method implemented by the development support apparatus 10 is used to adjust a control parameter for the servomotor 30. The method includes a gain adjustment process (S10) for adjusting the position proportional gain Kₚₚ and the velocity proportional gain Kᵥₚ in parallel. The position proportional gain Kₚₚ is used in position control performed by the servo driver 20 that controls the servomotor 30. The velocity proportional gain Kᵥₚ is used in velocity control performed by the servo driver 20. In the gain adjustment process, when the servo driver 20 is yet to determine the actual inertia value Jₚ of the load machine 40 (and the servomotor 30), the ratio of the position proportional gain Kₚₚ to the velocity proportional gain Kᵥₚ is set to a value smaller than the ratio set when the servo driver 20 has determined the actual inertia value Jₚ of the load machine 40 (and the servomotor 30).

When the actual inertia value Jₚ of the load machine 40 (and the servomotor 30) is yet to be determined, the control parameter adjustment method sets the ratio of the position proportional gain Kₚₚ to the velocity proportional gain Kᵥₚ to a value smaller than the ratio set when the servo driver 20 has determined the actual inertia value Jₚ of the load machine 40 (and the servomotor 30). In this case, the damping coefficient in a transfer function for the position control performed in the servo driver 20 is greater than a damping coefficient used when the actual inertia value Jₚ of the load machine 40 (and the servomotor 30) has been determined. The control parameter adjustment method thus enables the servo driver 20 to perform control that is less likely to cause an overshoot when the actual inertia value Jₚ of the load machine 40 (and the servomotor 30) is yet to be determined.

### Second Embodiment

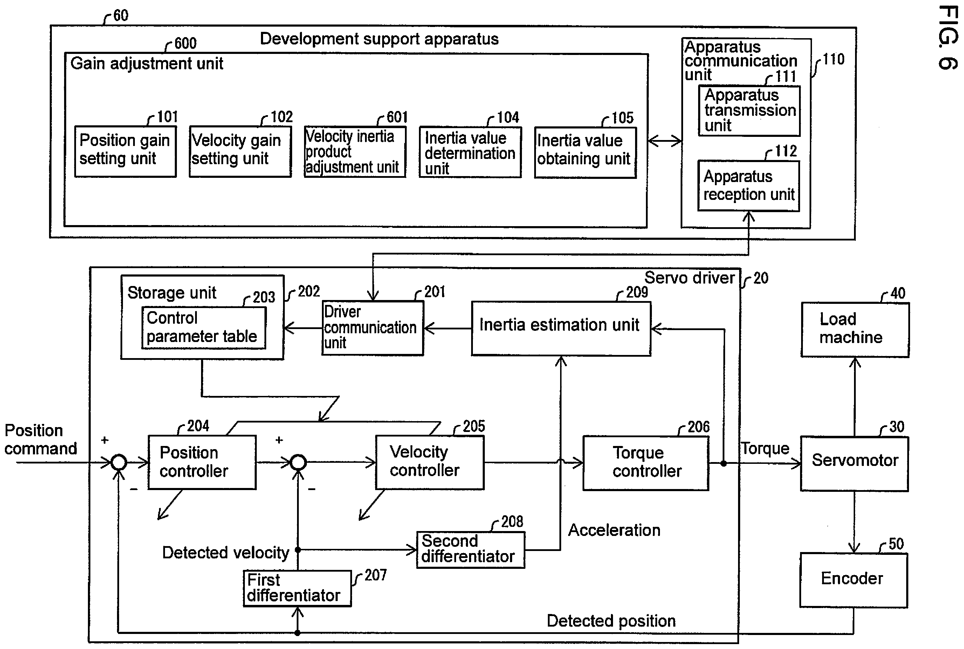

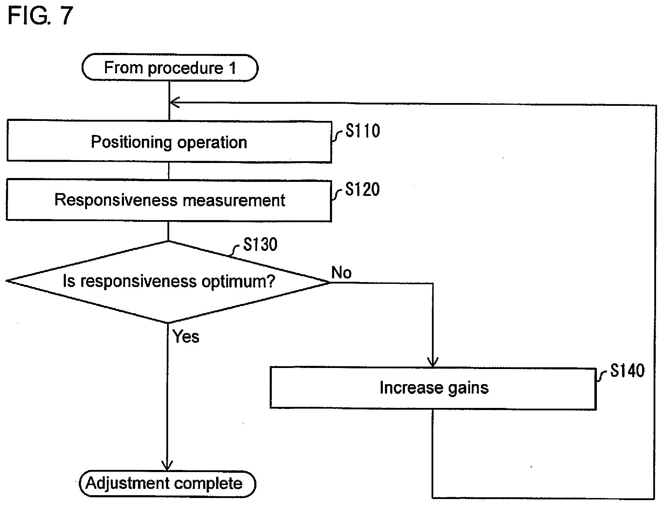

Another embodiment of the present invention will now be described with reference to Figs. 6 and 7. For simplicity, components and processes (steps and processing details) different from those in the first embodiment will be described. More specifically, the components and processes described in the first embodiment are included in the present embodiment. The term definitions in the first embodiment are also used in the present embodiment.

### Overview of Development Support Apparatus According to Second Embodiment

To facilitate understanding of a development support apparatus 60 (adjustment apparatus for adjusting a control parameter for a servomotor 30) according to the second embodiment of the present invention, the difference between the development support apparatus 60 and the development support apparatus 90 known in the art described with reference to Figs. 9 and 10 will now be described. As described above, the development support apparatus 90 known in the art and the servo driver 21 described with reference to Figs. 9 and 10 have Issue 2 described below.

The development support apparatus 90 known in the art does not cause the servo driver 21 to change the position gain and the velocity gain used in the servo driver 21 at the timing when the inertia set value J_{c} used by the velocity controller 212 in the servo driver 21 is changed. More specifically, at the timing when the inertia estimation unit 215 in the servo driver 21 changes the estimated inertia value of the load machine 40 (and the servomotor 30) and the velocity controller 212 uses the changed inertia set value J_{c}, the velocity gain used by the velocity controller 212 remains as before the inertia set value J_{c} is changed Thus, the characteristics of the velocity controller 212 in the servo driver 21 may change suddenly when the inertia estimation unit 215 in the servo driver 21 automatically updates the inertia set value J_{c} to a larger value. This may cause unfavorable phenomena such as an oscillation of the servomotor 30 (load machine 40) and a sudden change in its operation.

The development support apparatus 60 according to the second embodiment of the present invention responds to the issue 2 faced by the development support apparatus 90 known in the art. When the servo driver 20 (inertia estimation unit 209) updates the inertia set value, the development support apparatus 60 updates the velocity gain transmitted to the servo driver 20 in accordance with the changed inertia set value without causing the characteristics of the velocity controller 205 to change greatly in response to the update of the inertia set value.

The development support apparatus 60 responding to the issue 2 faced by the development support apparatus 90 known in the art and the servo driver 21 can now be summarized. When the apparatus reception unit 112 in the development support apparatus 60 receives the real inertia value Jₚ determined as the actual inertia value Jₚ of the load machine 40 (and the servomotor 30) from the servo driver 20, the gain adjustment unit 100 in the development support apparatus 60 sets the velocity proportional gain K'ᵥₚ used after the real inertia value Jₚ is received to cause the product of the initial inertia value Jo multiplied by the velocity proportional gain Kᵥₚ set before the real inertia value Jₚ is received to be equal to the product of the real inertia value Jₚ multiplied by the velocity proportional gain K'ᵥₚ set after the real inertia value Jₚ is received.

The development support apparatus 60 with this structure sets the velocity proportional gain K'ᵥₚ used after the real inertia value Jₚ is received to cause the product of the initial inertia value Jo multiplied by the velocity proportional gain Kᵥₚ set before the real inertia value Jₚ is received to be equal to the product of the real inertia value Jₚ multiplied by the velocity proportional gain K'ᵥₚ set after the real inertia value Jₚ is received. Thus, the development support apparatus 60 can adjust the velocity control characteristics of the servo driver 20 gradually without changing them greatly, independently of any large deviation of the initial inertia value J₀ from the real inertia value Jₚ. The development support apparatus 60 thus prevents an oscillation and a sudden operational change during control.

The gain adjustment unit 100 in the development support apparatus 60 sets the position proportional gain K'ₚₚ used after the real inertia value Jₚ is received based on the velocity proportional gain K'ᵥₚ set after the real inertia value Jₚ is received.

The development support apparatus 60 with this structure sets the position proportional gain K'ₚₚ used after the real inertia value Jₚ is received based on the velocity proportional gain K'ᵥₚ set after the real inertia value Jₚ is received. The position proportional gain K'ₚₚ used after the real inertia value Jₚ is received is set based on the velocity proportional gain K'ᵥₚ set after the real inertia value Jₚ is received independently of any large deviation of the initial inertia value J₀ from the real inertia value Jₚ. The development support apparatus 60 can use the velocity proportional gain K'ᵥₚ used after the real inertia value Jₚ is received to determine the position proportional gain K'ₚₚ to fall within a range in which the position control characteristics are stable. More specifically, the development support apparatus 60 determines the position proportional gain K'ₚₚ to be equal to K'ᵥₚ/α based on Formula 8 (described later). The development support apparatus 60 thus sets the optimum position proportional gain K'ₚₚ for performing control that is less likely to cause an overshoot. The development support apparatus 60 described briefly above will now be described in detail with reference to Fig. 6.

Fig. 6 is a block diagram showing the main components of the development support apparatus 60. The development support apparatus 60 differs from the development support apparatus 10 illustrated in Fig. 1 in its velocity inertia product adjustment unit 601, which replaces the position-velocity ratio adjustment unit 103 in the development support apparatus 10. The development support apparatus 60 is the same as the development support apparatus 10 except the velocity inertia product adjustment unit 601 replacing the position-velocity ratio adjustment unit 103. Thus, the velocity inertia product adjustment unit 601 will be described mainly, and the other components will not be described in detail.

More specifically, the development support apparatus 60 includes a gain adjustment unit 600, which includes the velocity inertia product adjustment unit 601 replacing the position-velocity ratio adjustment unit 103 included in the gain adjustment unit 100. When the inertia value obtaining unit 105 (apparatus reception unit 112) obtains the actual inertia value (real inertia value Jₚ) of the load machine 40 (and the servomotor 30), the velocity inertia product adjustment unit 601 adjusts the velocity proportional gain K'ᵥₚ to be set by (transmitted to) the servo driver 20 in the manner described below.

More specifically, the velocity inertia product adjustment unit 601 sets the velocity proportional gain used after the real inertia value Jₚ is received (current velocity proportional gain K'ᵥₚ) to cause the product of the initial inertia value Jo (initial inertia value J₀ before the real inertia value Jₚ is determined), multiplied by the velocity proportional gain Kᵥₚ transmitted to the servo driver 20 by the development support apparatus 60 before the inertia value obtaining unit 105 obtains the real inertia value Jₚ (previous velocity proportional gain Kᵥₚ) to be equal to the product of the real inertia value Jₚ multiplied by the new velocity proportional gain transmitted to the servo driver 20 after the real inertia value Jₚ is received (current velocity proportional gain K'ᵥₚ).

After the inertia value obtaining unit 105 obtains the real inertia value Jₚ, the velocity inertia product adjustment unit 601 also transmits, to the servo driver 20 (for setting), information indicating the current velocity proportional gain K'ᵥₚ together with the position proportional gain (current position proportional gain K'ₚₚ) adjusted (controlled) in the manner described below. More specifically, the velocity inertia product adjustment unit 601 transmits information indicating the current position proportional gain K'ₚₚ calculated in the manner described below to the servo driver 20, which can then use the gain as a control parameter.

More specifically, the velocity inertia product adjustment unit 601 sets the position proportional gain used after the real inertia value Jₚ is received (current position proportional gain K'ₚₚ) to allow the ratio of the position proportional gain Kₚₚ to the velocity proportional gain Kᵥₚ before the real inertia value Jₚ is received to be equal to the ratio used after the real inertia value Jₚ is received. The position proportional gain (position gain) transmitted to the servo driver 20 by the development support apparatus 60 before the real inertia value Jₚ is received is referred to as the previous position proportional gain Kₚₚ. In this case, the velocity inertia product adjustment unit 601 sets the current position proportional gain K'ₚₚ in the manner described below. The velocity inertia product adjustment unit 601 sets the current position proportional gain K'ₚₚ to allow the ratio of the previous position proportional gain Kₚₚ to the previous velocity proportional gain Kᵥₚ to be equal to the ratio of the current position proportional gain K'ₚₚ to the current velocity proportional gain K'ᵥₚ.

### Positioning Operation and Inertia Estimation

The development support apparatus 60 transmits the gains (the position proportional gain Kₚₚ and the velocity proportional gain Kᵥₚ) set (adjusted) by the gain adjustment unit 600 (velocity inertia product adjustment unit 601). The development support apparatus 60 provides a command for the servo driver 20 to drive and position the servomotor 30 using the gains transmitted to the servo driver 20. The inertia estimation unit 209 in the servo driver 20 measures the responsiveness of the positioning operation, and estimates the inertia value of the control targets (the load machine 40 and the servomotor 30) based on the measurement results. When the inertia estimation unit 209 cannot correctly estimate the inertia value, the gains may be too low to generate the acceleration and the torque used to estimate the inertia value. Thus, the development support apparatus 60 increases the gains (transmits information indicating larger gains) to the servo driver 20, which then performs the positioning operation. The estimation result Jₑ of the inertia value obtained by the inertia estimation unit 209 through the positioning operation is then transmitted from the servo driver 20 to the development support apparatus 60.

When the inertia estimation result Jₑ is received from the inertia estimation unit 209, the gain adjustment unit 600 (velocity inertia product adjustment unit 601) updates the control parameters transmitted to (to be set by) the servo driver 20 as written by Formula 8 using the current velocity proportional gain Kᵥₚ. $\begin{matrix}{J}_{c} = {J}_{e} \\ {K}_{vp}^{′} = \frac{{J}_{0}}{{J}_{e}} ⋅ {K}_{vp} \\ {K}_{pp}^{′} = \frac{{K}_{vp}^{′}}{α} = \frac{1}{α} ⋅ \frac{{J}_{0}}{{J}_{e}} ⋅ {K}_{vp}\end{matrix}$ Formula 8

As written by Formula 8, the updated velocity proportional gain K'ᵥₚ is set to cause the product of the initial inertia value Jo multiplied by the velocity proportional gain Kᵥₚ when the inertia estimation result is received to be equal to the product of the inertia estimation result Jₑ multiplied by the updated velocity proportional gain K'ᵥₚ. Additionally, the updated position proportional gain K'ₚₚ is updated based on the updated velocity proportional gain K'ᵥₚ as written by Formula 8. More specifically, the position proportional gain K'ₚₚ is determined to satisfy the relationship written by K'ₚₚ = K'ᵥₚ/α, where K'ₚₚ is the updated position proportional gain and K'ᵥₚ is the updated velocity proportional gain.

The control parameters to be transmitted to the servo driver 20 by the development support apparatus 60 are updated as written by Formula 8. This allows the characteristics of the velocity controller 205 to remain the same as written by Formula 9 below before and after the update. $\begin{matrix}{G}_{before} = {J}_{0} ⋅ {K}_{vp} \\ {G}_{after} = {J}_{e} ⋅ {K}_{vp}^{′} = {J}_{e} ⋅ \frac{{J}_{0}}{{J}_{e}} ⋅ {K}_{vp} = {J}_{0} ⋅ {K}_{vp}\end{matrix}$ Formula 9

### Positioning Operation and Measurement of Responsiveness

The development support apparatus 60 provides a command for the servo driver 20 to drive and position the servomotor 30 (as a trial), and to measure the responsiveness. The development support apparatus 60 improves the responsivity of the servo driver 20 by gradually increasing the velocity gain (velocity proportional gain Kᵥₚ) and the position gain (position proportional gain Kₚₚ) transmitted to the servo driver 20. When determining that the responsiveness of the servo driver 20 is optimum, the development support apparatus 60 ends the adjustment of the control parameters (the position gain and the velocity gain).

Fig. 7 is a flowchart showing the processing performed by the development support apparatus 60. More specifically, Fig. 7 is a flowchart showing an adjustment process implemented by the development support apparatus 60 to adjust the position gain and the velocity gain after the inertia value estimation result Jₑ is received from the inertia estimation unit 209 (adjustment process).

As shown in Fig. 7, the development support apparatus 60 first provides a command for the servo driver 20 to drive and position the servomotor 30 (as a trial) (S110). More specifically, the development support apparatus 60 causes the servo driver 20 to operate the servomotor 30. The servomotor 30 thus drives the load machine 40 using the received position gain and the received velocity gain. The development support apparatus 60 causes the servo driver 20 to measure the responsiveness (S120). More specifically, the development support apparatus 60 obtains the results of the positioning process performed by the servo driver 20 using the received position gain and the received velocity gain from, for example, the encoder 50. The development support apparatus 60 determines whether the responsiveness is optimum based on the measured responsiveness (e.g., the positioning results obtained from the encoder 50) (S130).

When determining that the responsiveness is not optimum (No in S130), the development support apparatus 60 increases the gains (the position gain and the velocity gain) (S140). More specifically, the development support apparatus 60 transmits, to the servo driver 21, information indicating the position gain and the velocity gain set higher than those corresponding to the responsiveness that has been determined not to be optimum. The processing from S110 to S130 is repeated. More specifically, the development support apparatus 60 improves the responsivity of the servo driver 21 by gradually increasing the position gain and the velocity gain.

When determining that the responsiveness is optimum (Yes in S130), the development support apparatus 60 ends the adjustment of the velocity gain and the position gain transmitted to the servo driver 20, or in other words determines the optimum gains (the position gain and the velocity gain), and causes the servo driver 20 to use the optimum gains.

The development support apparatus 60 improves the responsivity by gradually increasing the position gain (position proportional gain Kₚₚ) and the velocity gain (velocity proportional gain Kᵥₚ) to allow the ratio of the position gain to the velocity gain to be constant, and ends the adjustment when the responsiveness is optimum.

### Third Embodiment

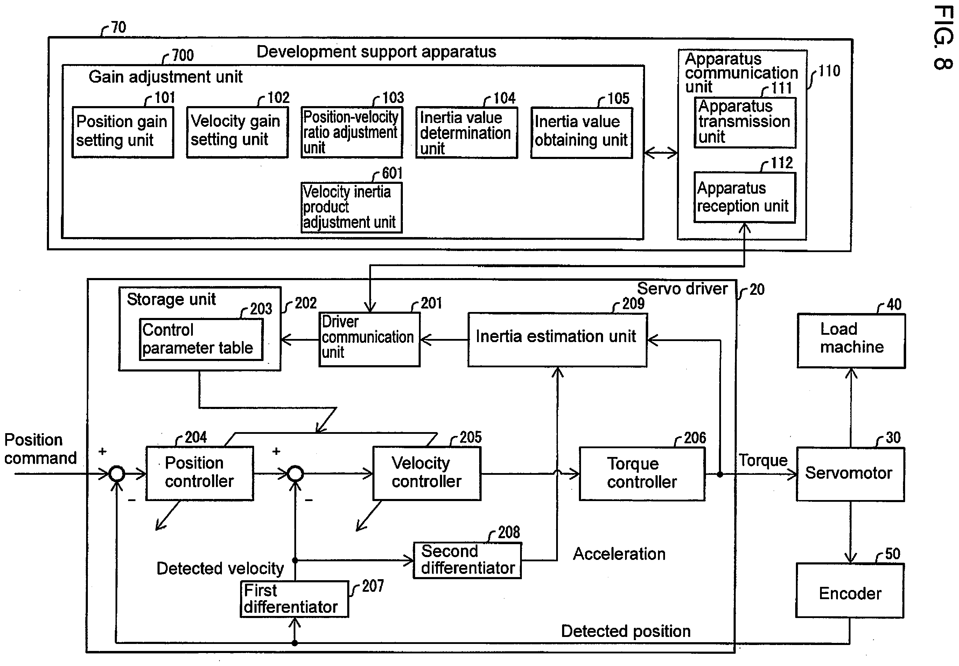

Another embodiment of the present invention will now be described with reference to Fig. 8. For simplicity, components and processes (steps and processing details) different from those in the first and second embodiments will be described. More specifically, the components and processes described in the first and second embodiments are included in the present embodiment. The term definitions in the first and second embodiments are also used in the present embodiment.

To facilitate understanding of a development support apparatus 70 (adjustment apparatus for adjusting a control parameter for a servomotor 30) according to the third embodiment of the present invention, the difference from the development support apparatus 90 known in the art described with reference to Figs. 9 and 10 will now be described.

Fig. 8 is a block diagram showing the main components of the development support apparatus 70 according to the third embodiment of the present invention. The development support apparatus 70 differs from the development support apparatus 60 illustrated in Fig. 6 in its position-velocity ratio adjustment unit 103 included in the development support apparatus 10, which is not included in the development support apparatus 60. More specifically, the development support apparatus 70 includes the components of the development support apparatus 10 and the components of the development support apparatus 60. The development support apparatus 70 includes a gain adjustment unit 700, which includes the position gain setting unit 101, the velocity gain setting unit 102, the position-velocity ratio adjustment unit 103, the inertia value determination unit 104, the inertia value obtaining unit 105, and the velocity inertia product adjustment unit 601.

Thus, the development support apparatus 70 can implement the processing performed by the development support apparatus 10 and the processing performed by the development support apparatus 60 in a continuous manner. More specifically, the development support apparatus 70 adjusts control parameters for the servomotor 30, and includes the gain adjustment unit 700, which adjusts, in parallel, the position proportional gain Kₚₚ used in position control performed by the servo driver 20 that controls the servomotor 30, and the velocity proportional gain Kᵥₚ used in velocity control performed by the servo driver 20.

When the servo driver 20 is yet to determine the actual inertia value Jₚ of the load machine 40 (and the servomotor 30), the gain adjustment unit 700 sets the ratio of the position proportional gain Kₚₚ to the velocity proportional gain Kᵥₚ to a value smaller than the ratio set when the servo driver 20 has determined the actual inertia value Jₚ of the load machine 40 (and the servomotor 30).

When the apparatus reception unit 112 in the development support apparatus 70 receives the real inertia value Jₚ determined as the actual inertia value Jₚ of the load machine 40 (and the servomotor 30) from the servo driver 20, the gain adjustment unit 700 in the development support apparatus 70 sets the velocity proportional gain K'ᵥₚ used after the real inertia value Jₚ is received to cause the product of the initial inertia value Jo multiplied by the velocity proportional gain Kᵥₚ before the real inertia value Jₚ is received to be equal to the product of the real inertia value Jₚ multiplied by the velocity proportional gain K'ᵥₚ used after the real inertia value Jₚ is received.

Additionally, the gain adjustment unit 700 in the development support apparatus 70 sets the position proportional gain K'ₚₚ used after the real inertia value Jₚ is received based on the velocity proportional gain K'ᵥₚ after the real inertia value Jₚ is received. Implementation Using Software

The control blocks (in particular, the position gain setting unit 101, the velocity gain setting unit 102, the position-velocity ratio adjustment unit 103, the inertia value determination unit 104, the inertia value obtaining unit 105, and the velocity inertia product adjustment unit 601) in the development support apparatus 10, the development support apparatus 60, and the development support apparatus 70 may be implemented by a logic circuit (hardware), such as an integrated circuit (IC) chip or by using software implemented by a central processing unit (CPU).

When the control blocks are implemented by using software, the development support apparatus 10, the development support apparatus 60, and the development support apparatus 70 include a CPU, which executes instructions included in a program or software to achieve its functions, a read-only memory (ROM) or a storage device (hereafter referred to as a storage medium) which stores the programs and various pieces of data readable by a computer (or by the CPU), and a random access memory (RAM), into which the program is expanded. The computer (or CPU) reads the program from the storage medium, and executes the program to achieve one or more aspects of the present invention. The storage medium may be a non-transitory tangible medium, such as a tape, a disk, a card, a semiconductor memory, or a programmable logic circuit. The program may be provided via any transmission medium that can transmit the program to the computer (such as a communication network or a broadcast wave). One or more embodiments of the present invention may be implemented using programs that are electronically transmitted in the form of data signals carried by carrier waves.

The technical features disclosed in different embodiments may be combined in other embodiments within the technical scope of the invention.

### REFERENCE SIGNS LIST

- 10: development support apparatus
- 20: servo driver
- 60: development support apparatus
- 70: development support apparatus
- 30: servomotor
- 40: load machine
- 100: gain adjustment unit
- 600: gain adjustment unit
- 700: gain adjustment unit
- Jₘₐₓ: estimated maximum value of inertia value of load machine
- Jo: initial inertia value
- Jₚ: real inertia value (actual inertia value of load machine)
- Kₚₚ: position proportional gain
- Kᵥₚ: velocity proportional gain

## Claims

1. An adjustment apparatus (60, 70) for adjusting a control parameter for a servomotor (30), the apparatus (60, 70) comprising:
a gain adjustment unit (600, 700) configured to adjust a position proportional gain (Kₚₚ) and a velocity proportional gain (Kᵥₚ), the position proportional gain (Kₚₚ) being used in position control performed in a servo driver (20) for controlling the servomotor (30), the velocity proportional gain (Kᵥₚ) being used in velocity control performed in the servo driver (20),
an inertia reception unit (112) configured to receive, from the servo driver (20), an inertia value of a load machine controlled by the servo driver (20),
wherein, when the servo driver (20) is yet to determine an actual inertia value (Jₚ) of a load machine, the inertia reception unit (112) receives, from the servo driver (20), an initial inertia value (Jo), and
**characterized in that**,
when the inertia reception unit (112) receives, from the servo driver (20), a real inertia value (Jₚ) determined as an actual inertia value (Jₚ) of the load machine, the gain adjustment unit (600, 700) sets the velocity proportional gain (K'ᵥₚ) used after the real inertia value (Jₚ) is received in a manner to cause a product of the initial inertia value (J₀) multiplied by the velocity proportional gain (Kᵥₚ) set before the real inertia value (Jₚ) is received to be equal to a product of the real inertia value (Jₚ) multiplied by the velocity proportional gain (K'ᵥₚ) used after the real inertia value (Jₚ) is received.

2. The adjustment apparatus (60, 70) according to claim 1, wherein
the gain adjustment unit (600, 700) sets the position proportional gain (K'ₚₚ) used after the real inertia value (Jₚ) is received based on the velocity proportional gain (K'ᵥₚ) used after the real inertia value (Jₚ) is received.

3. A method for adjusting a control parameter for a servomotor (30), the method comprising:
adjusting a position proportional gain (Kₚₚ) and a velocity proportional gain (Kᵥₚ), the position proportional gain (Kₚₚ) being used in position control performed in a servo driver (20) for controlling the servomotor (30), the velocity proportional gain (Kᵥₚ) being used in velocity control performed in the servo driver (20),
**characterized in that**:
in the step of adjusting the gains, when the servo driver (20) is yet to determine an actual inertia value (Jₚ) of a load machine, an initial inertia value (J₀) is received from the servo driver (20), and
when a real inertia value (Jₚ) determined as the actual inertia value (Jₚ) of the load machine is received from the servo driver (20), the gain adjustment unit (600, 700) sets the velocity proportional gain (K'ᵥₚ) used after the real inertia value (Jₚ) is received in a manner to cause a product of the initial inertia value (Jo) multiplied by the velocity proportional gain (Kᵥₚ) set before the real inertia value (Jₚ) is received to be equal to a product of the real inertia value (Jₚ) multiplied by the velocity proportional gain (K'ᵥₚ) used after the real inertia value (Jₚ) is received.

4. An information processing program causing a computer to function as the units of the adjustment apparatus (10, 60, 70) according to any one of claims 1 to 3.

5. A non-transitory computer-readable storage medium storing the information processing program according to claim 4.

## Patentansprüche

1. Anpassungsvorrichtung (60, 70) zum Anpassen eines Regelparameters für einen Servomotor (30), wobei die Vorrichtung (60, 70) umfasst:
eine Verstärkungsanpassungseinheit (600, 700), die dazu eingerichtet ist, eine proportionale Lageverstärkung (Kₚₚ) und eine proportionale Geschwindigkeitsverstärkung (Kᵥₚ) anzupassen, wobei die proportionale Lageverstärkung (Kₚₚ) bei einer Lageregelung verwendet wird, die in einem Servotreiber (20) zum Regeln des Servomotors (30) durchgeführt wird, wobei die proportionale Geschwindigkeitsverstärkung (Kᵥₚ) bei einer Geschwindigkeitsregelung verwendet wird, die in dem Servotreiber (20) durchgeführt wird,
eine Trägheitsempfangseinheit (112), die dazu eingerichtet ist, von dem Servotreiber (20) einen Trägheitswert einer Lastmaschine zu empfangen, die durch den Servotreiber (20) geregelt wird,
wobei, wenn der Servotreiber (20) einen tatsächlichen Trägheitswert (Jp) einer Lastmaschine erst noch zu bestimmen hat, die Trägheitsempfangseinheit (112) von dem Servotreiber (20) einen anfänglichen Trägheitswert (J0) empfängt, und
**dadurch gekennzeichnet, dass**
wenn die Trägheitsempfangseinheit (112) von dem Servotreiber (20) einen tatsächlichen Trägheitswert (Jₚ) empfängt, der als tatsächlicher Trägheitswert (Jₚ) der Lastmaschine bestimmt wurde, die Verstärkungsanpassungseinheit (600, 700) die proportionale Geschwindigkeitsverstärkung (K'ᵥₚ), die verwendet wird, nachdem der tatsächliche Trägheitswert (Jₚ) empfangen wurde, in einer Weise einstellt, dass bewirkt wird, dass ein Produkt des anfänglichen Trägheitswerts (Jo) multipliziert mit der proportionalen Geschwindigkeitsverstärkung (Kᵥₚ), die eingestellt wurde, bevor der tatsächliche Trägheitswert (Jₚ) empfangen wurde, gleich einem Produkt des tatsächlichen Trägheitswerts (Jₚ) multipliziert mit der proportionalen Geschwindigkeitsverstärkung (K'ᵥₚ) ist, die verwendet wird, nachdem der tatsächliche Trägheitswerts (Jₚ) empfangen wurde.

2. Anpassungsvorrichtung (60, 70) nach Anspruch 1, wobei
die Verstärkungsanpassungseinheit (600, 700) die proportionale Lageverstärkung (K'ₚₚ), die verwendet wird, nachdem der reale Trägheitswert (Jₚ) empfangen wurde, basierend auf der proportionalen Geschwindigkeitsverstärkung (K'ᵥₚ) einstellt, die verwendet wird, nachdem der reale Trägheitswert (Jₚ) empfangen wurde.

3. Verfahren zum Anpassen eines Regelparameters für einen Servomotor (30), wobei das Verfahren umfasst:
Anpassen einer proportionalen Lageverstärkung (Kₚₚ) und einer proportionalen Geschwindigkeitsverstärkung (Kᵥₚ), wobei die proportionale Lageverstärkung (Kₚₚ) bei einer Lageregelung verwendet wird, die in einem Servotreiber (20) zum Regeln des Servomotors (30) durchgeführt wird, wobei die proportionale Geschwindigkeitsverstärkung (Kᵥₚ) bei einer Geschwindigkeitsregelung verwendet wird, die im Servotreiber (20) durchgeführt wird,
**dadurch gekennzeichnet, dass**
bei dem Schritt des Einstellens der Verstärkungen, wenn der Servotreiber (20) einen tatsächlichen Trägheitswert (Jₚ) einer Lastmaschine erst noch zu bestimmen hat, ein anfänglicher Trägheitswert (J₀) von dem Servotreiber (20) empfangen wird, und
wenn ein tatsächlicher Trägheitswert (Jₚ), der als tatsächlicher Trägheitswert (Jₚ) der Lastmaschine bestimmt wurde, von dem Servotreiber (20) empfangen wird, die Verstärkungsanpassungseinheit (600, 700) die proportionale Geschwindigkeitsverstärkung (K'ᵥₚ), die verwendet wird, nachdem der tatsächliche Trägheitswert (Jₚ) empfangen wurde, in einer Weise einstellt, dass bewirkt wird, dass ein Produkt des anfänglichen Trägheitswerts (Jo) multipliziert mit der proportionalen Geschwindigkeitsverstärkung (Kᵥₚ), die eingestellt wurde, bevor der tatsächliche Trägheitswert (Jₚ) empfangen wurde, gleich einem Produkt des tatsächlichen Trägheitswerts (Jₚ) multipliziert mit der proportionalen Geschwindigkeitsverstärkung (K'ᵥₚ) ist, die verwendet wird, nachdem der tatsächliche Trägheitswert (Jₚ) empfangen wurde.

4. Informationsverarbeitungsprogramm, das bewirkt, dass ein Computer als die Einheiten der Anpassungsvorrichtung (10, 60, 70) nach einem der Ansprüche 1 bis 3 funktioniert.

5. Nichtflüchtiges computerlesbares Speichermedium, auf dem das Informationsverarbeitungsprogramm nach Anspruch 4 gespeichert ist.

## Revendications

1. Dispositif de réglage (60, 70) pour régler un paramètre de commande d'un servomoteur (30), le dispositif (60, 70) comprenant :
une unité de réglage de gain (600, 700) configurée pour régler un gain proportionnel à la position (Kₚₚ) et un gain proportionnel à la vitesse (Kᵥₚ), le gain proportionnel à la position (Kₚₚ) étant utilisé dans la commande de position effectuée dans un servoconducteur (20) pour commander le servomoteur (30), le gain proportionnel à la vitesse (Kᵥₚ) étant utilisé dans la commande de vitesse effectuée dans le servoconducteur (20),
une unité de réception d'inertie (112) configurée pour recevoir, du servoconducteur (20), une valeur d'inertie d'une machine de charge commandée par le servoconducteur (20),
dans lequel, lorsque le servoconducteur (20) doit encore déterminer une valeur d'inertie réelle (Jₚ) d'une machine de charge, l'unité de réception d'inertie (112) reçoit, du servoconducteur (20), une valeur d'inertie initiale (J₀), et
**caractérisé en ce que**,
lorsque l'unité de réception de l'inertie (112) reçoit, de la part du servoconducteur (20), une vraie valeur d'inertie (Jₚ) déterminée comme une valeur d'inertie réelle (Jₚ) de la machine de charge, l'unité de réglage du gain (600, 700) fixe le gain proportionnel à la vitesse (K'ᵥₚ) utilisé après la réception de la vraie valeur d'inertie (Jₚ) de manière à ce qu'un produit de la valeur d'inertie initiale (J₀) multipliée par le gain proportionnel à la vitesse (Kᵥₚ) fixé avant la réception de la vraie valeur d'inertie (Jₚ) soit égal à un produit de la vraie valeur d'inertie (Jₚ) multipliée par le gain proportionnel à la vitesse (K'ᵥₚ) utilisé après la réception de la vraie valeur d'inertie (Jₚ).

2. Dispositif de réglage (60, 70) selon la revendication 1, dans lequel
l'unité d'ajustement du gain (600, 700) définit le gain proportionnel à la position (K'ₚₚ) utilisé après réception de la vraie valeur d'inertie (Jₚ) sur la base du gain proportionnel à la vitesse (K'ᵥₚ) utilisé après réception de la vraie valeur d'inertie réelle (Jₚ).

3. Procédé pour ajuster un paramètre de commande pour un servomoteur (30), le procédé comprenant :
l'ajustement d'un gain proportionnel à la position (Kₚₚ) et d'un gain proportionnel à la vitesse (Kᵥₚ), le gain proportionnel à la position (Kₚₚ) étant utilisé dans une commande de position effectuée dans un servoconducteur (20) pour commander le servomoteur (30), le gain proportionnel à la vitesse (Kᵥₚ) étant utilisé dans la commande de vitesse effectuée dans le servoconducteur (20),
**caractérisé en ce que** :
dans l'étape d'ajustement des gains, lorsque le servoconducteur (20) doit encore déterminer une valeur d'inertie réelle (Jₚ) d'une machine de charge, une valeur d'inertie initiale (Jo) est reçue du servoconducteur (20), et
lorsqu'une vraie valeur d'inertie (Jₚ) déterminée comme la valeur d'inertie réelle (Jₚ) de la machine de charge est reçue du servoconducteur (20), l'unité de réglage du gain (600, 700) fixe le gain proportionnel à la vitesse (K'ᵥₚ) utilisé après la réception de la vraie valeur d'inertie (Jₚ) de manière à ce qu'un produit de la valeur d'inertie initiale (J₀) multipliée par le gain proportionnel à la vitesse (Kᵥₚ) fixé avant la réception de la vraie valeur d'inertie (Jₚ) soit égal à un produit de la vraie valeur d'inertie (Jₚ) multipliée par le gain proportionnel à la vitesse (K'ᵥₚ) utilisé après la réception de la vraie valeur d'inertie (Jₚ).

4. Programme de traitement d'information faisant fonctionner un ordinateur comme les unités du dispositif de réglage (10, 60, 70) selon l'une quelconque des revendications 1 à 3.

5. Support de stockage non transitoire lisible par ordinateur stockant le programme de traitement d'information selon la revendication 4.
